(19) Europäisches Patentamt / European Patent Office / Office européen des brevets

(11) **EP 4 613 081 A1**

(12) **EUROPEAN PATENT APPLICATION**
published in accordance with Art. 153(4) EPC

(43) Date of publication:
**10.09.2025  Bulletin 2025/37**

(21) Application number: **23885562.1**

(22) Date of filing: **23.10.2023**

(51) International Patent Classification (IPC):
**A01B 69/00** $^{(2006.01)}$     **G05D 1/43** $^{(2024.01)}$

(52) Cooperative Patent Classification (CPC):
**A01B 69/00; G05D 1/43**

(86) International application number:
**PCT/JP2023/038115**

(87) International publication number:
**WO 2024/095802 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **02.11.2022  JP 2022176121**
              **02.11.2022  JP 2022176120**

(71) Applicant: **Kubota Corporation**
**Osaka 556-8601 (JP)**

(72) Inventors:
- **NAGAO, Mitsuaki**
  **Sakai-shi, Osaka 590-0908 (JP)**
- **ARAKAWA, Yuma**
  **Sakai-shi, Osaka 590-0908 (JP)**

(74) Representative: **Müller-Boré & Partner**
**Patentanwälte PartG mbB**
**Friedenheimer Brücke 21**
**80639 München (DE)**

(54) **DRIVING CONTROL SYSTEM, WORK VEHICLE, AND DRIVING CONTROL METHOD**

(57)  A travel control system includes a processing device to acquire first time-series images including a first portion of a crop row or a ridge in a field from a first imaging device attached to a work vehicle for agriculture so as to face in a first direction, acquire second time-series images including a second portion of the crop row or the ridge from a second imaging device attached to the work vehicle so as to face in a second direction, and execute image processing on the first time-series images and the second time-series images to determine a travel path of the work vehicle; and a controller configured to control travel of the work vehicle based on the travel path. The processing device finds a first fitted line of the first portion in a vehicle coordinate system, based on the first time-series images, finds a second fitted line of the second portion in the vehicle coordinate system, based on the second time-series images, and determines the travel path based on the first fitted line and the second fitted line.

FIG.19

**Description**

## TECHNICAL FIELD

The present invention relates to travel control systems, work vehicles, and travel control methods.

## BACKGROUND ART

Research and development has been directed to the automation of work vehicles, such as tractors, to be used in fields. For example, work vehicles have been put to practical use which travel via automatic steering by utilizing a positioning system capable of precise positioning, e.g., GNSS (Global Navigation Satellite System). Work vehicles that automatically perform speed control as well as automatic steering have also been put to practical use.

Moreover, vision guidance systems are being developed which detect rows of crops (crop rows) or ridges in a field by using an imaging device such as a camera, and control the travel of a work vehicle along the detected crop rows or ridges.

Patent Document No. 1 discloses an implement that travels along a ridge in cultivated land where crops are planted in ridges which are formed in rows. Patent Document No. 1 describes binarizing a raw image acquired by capturing an image of the cultivated land from obliquely above with an onboard camera, and thereafter generating a planar perspective projection image. With the technique disclosed by Patent Document No. 1, the planar perspective projection image is rotated to generate a large number of rotated images having different orientations from each other and thus to detect a work path between the ridges.

## CITATION LIST

### PATENT LITERATURE

Patent Document No. 1: Japanese Laid-Open Patent Publication No. 2016-208871

## SUMMARY OF INVENTION

### TECHNICAL PROBLEM

There may be a field where curved crop rows or ridges are formed. It is required to control the travel of the work vehicle along the crop rows or the ridges even in such a field.

### SOLUTION TO PROBLEM

A travel control system according to an embodiment of the present disclosure includes a processing device to acquire first time-series images including a first portion of a crop row or a ridge in a field from a first imaging device attached to a work vehicle for agriculture so as to face in a first direction; acquire second time-series images including a second portion of the crop row or the ridge from a second imaging device attached to the work vehicle so as to face in a second direction different from the first direction; and execute image processing on the first time-series images and the second time-series images to determine a travel path of the work vehicle; and a controller to control travel of the work vehicle based on the travel path. The processing device finds a first fitted line of the first portion in a vehicle coordinate system fixed to the work vehicle, based on the first time-series images, finds a second fitted line of the second portion in the vehicle coordinate system, based on the second time-series images, and determines the travel path based on the first fitted line and the second fitted line.

A work vehicle according to an embodiment of the present disclosure includes a first imaging device; a second imaging device; and the above-described travel control system.

A travel control method according to an embodiment of the present disclosure is a travel control method for a work vehicle to be implemented by a computer. The travel control method causes a computer to execute: acquiring first time-series images including a first portion of a crop row or a ridge in a field from a first imaging device attached to a work vehicle for agriculture so as to face in a first direction, acquiring second time-series images including a second portion of the crop row or the ridge from a second imaging device attached to the work vehicle so as to face in a second direction different from the first direction, and finding a first fitted line of the first portion in a vehicle coordinate system fixed to the work vehicle, based on the first time-series images, finding a second fitted line of the second portion in the vehicle coordinate system, based on the second time-series images, and determining a travel path of the work vehicle based on the first fitted line and the second fitted line.

A travel control system according to another embodiment of the present disclosure includes a processing device to acquire first time-series images including a first portion of a crop row or a ridge in a field from a first imaging device attached to a work vehicle for agriculture so as to face in a first direction; acquire second time-series images including a second portion of the crop row or the ridge from a second imaging device attached to the work vehicle so as to face in a second direction different from the first direction; and execute image processing on the first time-series images and the second time-series images to determine a travel path of the work vehicle; and a controller to control travel of the work vehicle based on an output from the processing device. The processing device finds a first fitted line of the first portion in a vehicle coordinate system fixed to the work vehicle, based on the first time-series images, and finds a second fitted line of the second portion in the vehicle coordinate system, based on the second time-series images. The controller controls the travel path of the work vehicle based on a first distance, on the vehicle coordinate system, from a front reference point on the work vehicle to the first fitted line and a second distance, on the vehicle coordinate system, from a rear reference point on the work vehicle to the second fitted line.

A work vehicle according to still another embodiment of the present disclosure includes a first imaging device; a second imaging device; and the above-described travel control system.

A travel control method according to an embodiment of the present disclosure is a travel control method for a work vehicle to be implemented by a computer. The travel control method causes a computer to execute: acquiring first time-series images including a first portion of a crop row or a ridge in a field from a first imaging device attached to a work vehicle for agriculture so as to face in a first direction, acquiring second time-series images including a second portion of the crop row or the ridge from a second imaging device attached to the work vehicle so as to face in a second direction different from the first direction, and finding a first fitted line of the first portion in a vehicle coordinate system fixed to the work vehicle, based on the first time-series images, finding a second fitted line of the second portion in the vehicle coordinate system, based on the second time-series images, and controlling travel of the work vehicle based on a first distance, on the vehicle coordinate system, from a front reference point on the work vehicle to the first fitted line and a second distance, on the vehicle coordinate system, from a rear reference point on the work vehicle to the second fitted line.

General or specific aspects of the present disclosure may be implemented using devices, systems, methods, integrated circuits, computer programs, non-transitory computer-readable storage media, or any combination thereof. The computer-readable storage media may be inclusive of a volatile storage medium, or a non-volatile storage medium. The device may include a plurality of devices. In the case where the device includes two or more devices, the two or more devices may be disposed within a single apparatus, or divided over two or more separate apparatuses.

## ADVANTAGEOUS EFFECTS OF INVENTION

According to an embodiment of the present disclosure, even in a field including curved crop rows or ridges, it is possible to control the travel of the work vehicle along the crop rows or ridges.

## BRIEF DESCRIPTION OF DRAWINGS

FIG. **1** schematically shows how two imaging devices attached to an agricultural machine capture images of the ground surface.

FIG. **2** is a perspective view schematically showing the relationship among a body coordinate system and a camera coordinate system that are fixed to the agricultural machine and a world coordinate system that is fixed to the ground surface.

FIG. **3** is a plan view schematically showing a portion of a field where a plurality of crop rows are provided on the ground surface.

FIG. **4** schematically shows an example of image frontward of the agricultural machine shown in FIG. **3** acquired by a first imaging device thereof.

FIG. **5** is a plan view schematically showing a state where the forward traveling direction for the agricultural machine is inclined with respect to the direction in which the crop rows extend.

FIG. **6** schematically shows an example of image frontward of the agricultural machine shown in FIG. **5** acquired by the first imaging device thereof.

FIG. **7** is a plan view schematically showing a portion of a field where a plurality of curved crop rows are provided on the ground surface.

FIG. **8** is a block diagram showing an example configuration of a travel control system according to an embodiment of the present disclosure.

FIG. **9** is a block diagram showing an example hardware configuration of a processing device.

FIG. **10** is a flowchart showing an example algorithm by which the travel control system according to an embodiment of the present disclosure determines a travel path of the agricultural machine based on results of detection of a crop row or a ridge.

FIG. **11** is an image corresponding to one frame of image in first time-series images acquired by the first imaging device mounted on the agricultural machine.

FIG. **12A** schematically shows an example of image frontward of the agricultural machine that is included in the first time-series images acquired by the first imaging device during travel of the agricultural machine.

FIG. **12B** schematically shows an example of image rearward of the agricultural machine that is included in the second time-series images acquired by a second imaging device during travel of the agricultural machine.

FIG. **13** is a perspective view schematically showing positions of each of a camera coordinate system of the imaging device at a first pose and a camera coordinate system of an imaging device at a second pose, with respect to a reference plane **Re**.

FIG. **14** is a plan view schematically showing positions of each of a first region of interest and a second region of interest respectively included in a first plan-view image and a second plan-view image in a vehicle coordinate system, with respect to the agricultural machine.

FIG. **15** is a flowchart showing an example algorithm according to implementation example 1.

FIG. **16** is a plan view schematically showing an example of first fitted line, an example of second fitted line and an example of approximation curve on the vehicle coordinate system.

FIG. **17** is a plan view schematically showing a first portion and a second portion respectively located in the first region of interest and a second region of interest in the vehicle coordinate system while the agricultural machine is traveling along a straight crop row.

FIG. **18** is a plan view schematically showing an example of control points and an example of approximation curve on the vehicle coordinate system.

FIG. **19** is a plan view provided to describe travel control along the travel path set on the vehicle coordinate system.

FIG. **20** is a flowchart showing an example algorithm according to implementation example 2.

FIG. **21** is a plan view schematically showing an example of positions of each of the first fitted line, the second fitted line, a front reference point and a rear reference point on the vehicle coordinate system, with respect to the agricultural machine.

FIG. **22** is a plan view schematically showing the first region of interest, the second region of interest, the first fitted line and the second fitted line in the vehicle coordinate system while the agricultural machine is traveling along a straight crop row.

FIG. **23** is a perspective view showing an example of external appearance of the agricultural machine according to an embodiment of the present disclosure.

FIG. **24** is a side view schematically showing an example of the agricultural machine to which an implement is attached.

FIG. **25** is a block diagram showing an example schematic configuration of the agricultural machine and the implement.

## DESCRIPTION OF EMBODIMENTS

Hereinafter, embodiments of the present disclosure will be described. Note, however, that unnecessarily detailed descriptions may be omitted. For example, detailed descriptions on what is well known in the art or redundant descriptions on what is substantially the same configuration may be omitted. This is to avoid lengthy description and to facilitate the understanding of those skilled in the art. The accompanying drawings and the following description, which are provided by the present inventors so that those skilled in the art can sufficiently understand the present disclosure, are not intended to limit the scope of claims. In the following description, component elements having identical or similar functions are denoted by identical reference numerals.

The following embodiments are only exemplary, and the technique according to the present disclosure is not limited to the following embodiments. For example, numerical values, shapes, materials, steps, orders of steps, layout in a display screen, etc., that are indicated in the following embodiments are only exemplary, and admit of various modifications so long as it makes technological sense. Any one implementation may be combined with another so long as it makes technological sense to do so.

As used in the present disclosure, an "agricultural machine" broadly includes any machine that performs basic tasks of agriculture, e.g., "tilling", "planting", and "harvesting", in fields. An agricultural machine is a machine that has a functionality and structure to perform agricultural operations such as tilling, seeding, preventive pest control, manure spreading, planting of crops, or harvesting for the ground surface within a field. Such agricultural work, tasks, or operations may be referred to as "groundwork", or simply as "work", "tasks", or "operations". An agricultural machine does not need to include a traveling device moving the agricultural machine itself, and may travel by being attached to, or towed by, another vehicle including a traveling device. Not only does a work vehicle, such as a tractor, function as an "agricultural machine" by itself alone, but an implement that is attached to, or towed by, a work vehicle and the work vehicle may, as a whole, function as one "agricultural machine". Examples of agricultural machines include tractors, vehicles for crop management, vegetable transplanters, mowers, and field-moving robots.

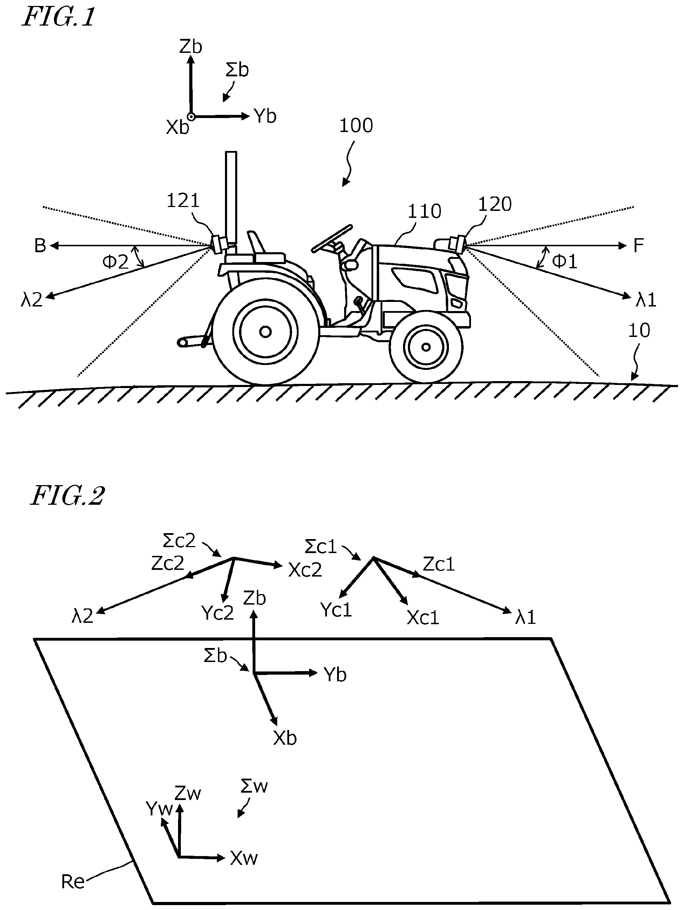

First, with reference to FIG. **1** through FIG. **7,** an overview of a travel control system according to an embodiment of the present disclosure will be described.

A travel control system according to an embodiment of the present disclosure includes first and second imaging devices used as being attached to an agricultural machine. The first and second imaging devices are each secured to the agricultural machine so as to capture an image of the ground surface on which the agricultural machine travels and thus acquire time-series images including at least a portion of the ground surface. Specifically, the first imaging device is attached to the agricultural machine so as to face in a first direction. The first imaging device acquires first time-series images including a first portion of crop rows or ridges in a field. The second imaging device is attached to the agricultural machine so as to face in a second direction different from the first direction. The second imaging device acquires second time-series images including a second portion of the crop rows or the ridges in the field. The first portion and the second portion of the crop rows or the ridges will be described below.

The first direction and the second direction are respectively directions in which camera optical axes of the first and second imaging devices are directed. In an embodiment of the present disclosure, the first direction is a forward direction for the agricultural machine, and the second direction is a rearward direction for the agricultural machine. In more detail, as described below, the first direction is a direction inclined with respect to a forward traveling direction for the agricultural machine toward the ground surface. The second direction is a direction inclined with respect to a backward traveling direction for the agricultural machine, opposite to the forward traveling direction, toward the ground surface. Note that neither the first direction nor the second direction is limited to such a direction. The first imaging device acquires images, of an area frontward of the agricultural machine, that form the first time-series images. The second imaging device acquires images, of an area rearward of the agricultural machine, that form the second time-series images. The first time-series images and the second time-series images are each typically time-series color images, but may be monochrome images.

FIG. **1** schematically shows how a first imaging device **120** and a second imaging device **121** attached to an agricultural machine **100**, such as, for example, a tractor, a vehicle for crop management or the like captures images of a ground surface **10**. In the example of FIG. **1,** the agricultural machine **100** includes a vehicle body **110** capable of traveling. In the example of FIG. **1,** the first imaging device **120** is secured frontward of the vehicle body **110**, and the second imaging device **121** is secured rearward of the vehicle body **110**. Note that neither the first imaging device **120** nor the second imaging device **121** is limited to being attached to such a position. For example, the first imaging device **120** may be secured sideward of the vehicle body **110** with a camera optical axis thereof being directed in the forward traveling direction. The second imaging device **121** may be secured sideward of the vehicle body **110** with a camera optical axis thereof being directed in the backward traveling direction, opposite to the forward traveling direction, or in a direction crossing the forward traveling direction.

For referencing sake, FIG. 1 shows a vehicle coordinate system $\Sigma b$ having an **Xb** axis, a **Yb** axis, and a **Zb** axis that are orthogonal to one another. The vehicle coordinate system $\Sigma b$ is a coordinate system that is fixed to the agricultural machine **100.** The origin of the vehicle coordinate system $\Sigma b$ may be set on, for example, a rear wheel axis of the agricultural machine **100** as seen in a plan view seen from above the ground surface **10** along which the agricultural machine **100** travels, as described below. In the figure, for ease of viewing, the origin of the vehicle coordinate system $\Sigma b$ is illustrated as lying external to the agricultural machine **100**. In the vehicle coordinate system $\Sigma b$ according to the present disclosure, the **Yb** axis coincides with the forward traveling direction (direction of arrow **F)** while the agricultural machine **100** is traveling straight. As viewed from the coordinate origin in a positive direction along the **Yb** axis, the **Xb** axis coincides with the directly right direction, and the **Zb** axis coincides with the vertically upward direction.

The first and second imaging devices **120** and **121** are each, for example, an onboard camera that includes a CCD (Charge Coupled Device) or a CMOS (Complementary Metal Oxide Semiconductor) image sensor. The first and second imaging devices **120** and **121** according to an embodiment of the present disclosure are each a monocular camera that is capable of capturing motion pictures at a frame rate of, for example, 3 frames/second (fps: frames per second) or above.

FIG. **2** is a perspective view schematically showing the relationship among the aforementioned vehicle coordinate system $\Sigma b$, a camera coordinate system $\Sigma c1$ of the first imaging device **120,** a camera coordinate system $\Sigma c2$ of the second imaging device **121,** and a world coordinate system $\Sigma w$ that is fixed to the ground surface **10.** The camera coordinate system $\Sigma c1$ has an **Xc1** axis, a **Yc1** axis, and a **Zc1** axis that are orthogonal to one another. The camera coordinate system $\Sigma c2$ has an **Xc2** axis, a **Yc2** axis, and a **Zc2** axis that are orthogonal to one another. The world coordinate system $\Sigma w$ has an **Xw** axis, a **Yw** axis, and a **Zw** axis that are orthogonal to one another. In the example of FIG. **2,** the **Xw** axis and the **Yw** axis of the world coordinate system $\Sigma w$ are on a reference plane **Re** that expands along the ground surface **10**.

The first imaging device **120** is mounted frontward of the agricultural machine **100** so as to face in the first direction (so as to face forward). Therefore, the position and orientation of the camera coordinate system $\Sigma c1$ with respect to the

vehicle coordinate system Σ**b** are fixed in a known state. The **Zc1** axis of the camera coordinate system Σ**c1** is on a camera optical axis λ**1.** In the illustrated example, the camera optical axis λ**1** is inclined with respect to the forward traveling direction F of the agricultural machine **100** toward the ground surface **10,** with an angle of depression Φ that is greater than 0°.

The second imaging device **121** is mounted rearward of the vehicle body **110** so as to face in the second direction (so as to face rearward). Therefore, the position and orientation of the camera coordinate system Σ**c2** with respect to the vehicle coordinate system Σ**b** are fixed in a known state like in the case of the camera coordinate system Σ**c1.** The **Zc2** axis of the camera coordinate system Σ**c2** is on a camera optical axis λ**2.** In the illustrated example, the camera optical axis λ**2** is inclined with respect to the backward traveling direction **B,** opposite to the forward traveling direction **F,** of the agricultural machine **100** toward the ground surface **10,** with an angle of depression Φ that is greater than 0°.

The forward traveling direction **F** and the backward traveling direction **B** for the agricultural machine **100** are generally parallel to the ground surface **10,** along which the agricultural machine **100** travels. The angles of depression Φ**1** and Φ**2** may each be set to a range of e.g. not less than 0° and not more than 60°. The angles of depression Φ**1** and Φ**2** may be the same as, or different from, each other. In the case where the positions at which the two imaging devices are mounted are close to the ground surface **10,** the orientations of the camera optical axes λ**1** and λ**2** may each be set so that the angles of depression Φ**1** and Φ**2** each have a negative value, that is, so that the orientations of the camera optical axes λ**1** and λ**2** each have a positive angle of elevation.

While the agricultural machine **100** is traveling on the ground surface **10,** the camera coordinate systems Σ**c1** and Σ**b2** and the vehicle coordinate system Σ**b** translate relative to the world coordinate system Σ**w**. When the agricultural machine **100** rotates or swings in directions of pitch, roll, and yaw during travel, the vehicle coordinate system Σ**b** and the camera coordinate systems Σ**c1** and Σ**c2** rotate relative to the world coordinate system Σ**w**. In the following description, for simplicity, it is assumed that the agricultural machine **100** does not rotate in the pitch or roll direction and that the agricultural machine **100** moves essentially parallel to the ground surface **10.**

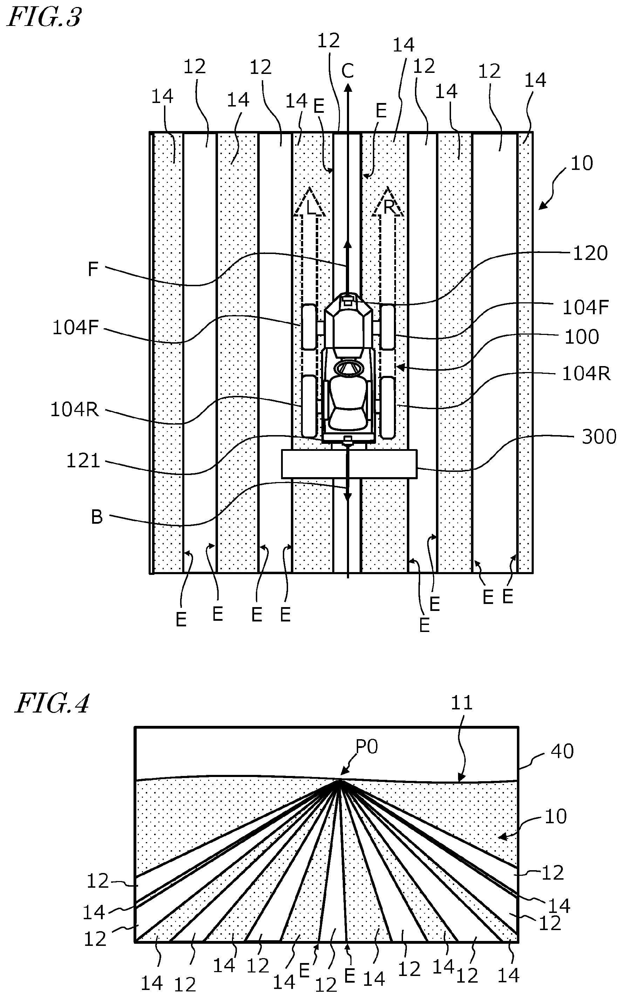

FIG. **3** is a plan view schematically showing a portion of a field in which a plurality of crop rows **12** are provided on the ground surface **10.** A crop row **12** is a row that is formed by crops or seedlings being continuously planted on the ground surface **10** of the field in one direction. For example, the crop row **12** may be an aggregation of crops that are planted in a ridge of the field. A row formed by seedlings being continuously planted on the ground surface **10** of the field in one direction may be referred to as a "seedling row". As described above, each individual crop row **12** is a row that is formed by an aggregation of crops that have been planted in the field. Therefore, strictly describing, the shape of a crop row may be complex depending on the shapes of crops and the positional arrangement of crops. The width of a crop row **12** changes as the crops growth. Between each two crop rows **12** adjacent to each other, a belt-shaped intermediate region **14,** in which no crops have been planted, exists. Such intermediate regions **14** are each a region that is interposed between two edge lines E facing each other between two adjacent crop rows **12.** In the case where a plurality of crops are planted for one ridge in a width direction of the ridge, a plurality of crop rows **12** are formed on the one ridge. In such a case, among the plurality of crop rows **12** that are formed on the ridge, an edge line E of the crop row **12** that is located at an end of the width direction of the ridge serves as a delineator of an intermediate region **14.** In other words, an intermediate region **14** lies between the edge lines E of crop rows **12** that are located at ends of the ridge in the width direction, among the edge lines E of the plurality of crop rows **12.**

Since such an intermediate region **14** functions as a region (work path) along which the wheels of the agricultural machine **100** may pass, the "intermediate region" may be referred to as a "work path".

In the present disclosure, an "edge line" of a crop row means a reference line segment (which may also include a curve) defining a travel path for an agricultural machine. The "travel path" may be referred to as a "target path". Such reference line segments may be defined as both of two ends of a belt-like region (work path) along which the wheels of the agricultural machine are allowed to pass. A specific method for determining the "edge lines" of a crop row will be described below.

FIG. **3** schematically shows one agricultural machine **100** traveling in a field in which the crop rows **12** are formed. The agricultural machine **100** includes left and right front wheels **104F** and left and right rear wheels **104R** as traveling devices, and tows an implement **300.** The front wheels **104F** are wheels responsible for steering.

In the example shown in FIG. **3,** thick broken-lined arrows L and R are respectively indicated for the work paths **14** that are located on opposite sides of one crop row **12** in the middle. While the agricultural machine **100** is traveling on a travel path that is indicated by solid-lined arrow C, the front wheels **104F** and the rear wheels **104R** of the agricultural machine **100** are required to move along arrows **L** and **R** in the work paths **14,** so as not to step on the crop row **12.** In an embodiment of the present disclosure, as described below, the first and second imaging devices **120** and **121** attached to the agricultural machine **100** are used to detect the first portion and the second portion included in the crop row **12,** and the travel path is determined based on a fitted line of the first portion and a fitted of the second portion in the vehicle coordinate system Σ**b.** Therefore, it is made possible to control the steering and the travel of the agricultural machine **100** so that the front wheels **104F** and the rear wheels **104R** move along arrows **L** and **R** in the work paths **14.** Controlling the steering and the travel of the agricultural machine **100** based on the results of detection of the crop row in this manner may be referred to as "row-following travel control".

FIG. **4** schematically shows an example of frontward image **40** acquired by the first imaging device **120** of the agricultural machine **100** shown in FIG. **3.** As understood from FIG. **1** or FIG. **2,** the description on the frontward image **40** is also applicable to a rearward image acquired by the second imaging device **121.** In the example of the image **40** shown in FIG. **4,** the agricultural machine **100** travels on the travel path indicated by solid-lined arrow **C** as shown in FIG. **3.** Therefore, the plurality of crop rows **12** and the intermediate regions (work paths) **14** extending in parallel to each other on the ground surface **10** cross each other at a vanishing point **P0** on a horizon **11.** The vanishing point **P0** is located in a central region of the image **40.**

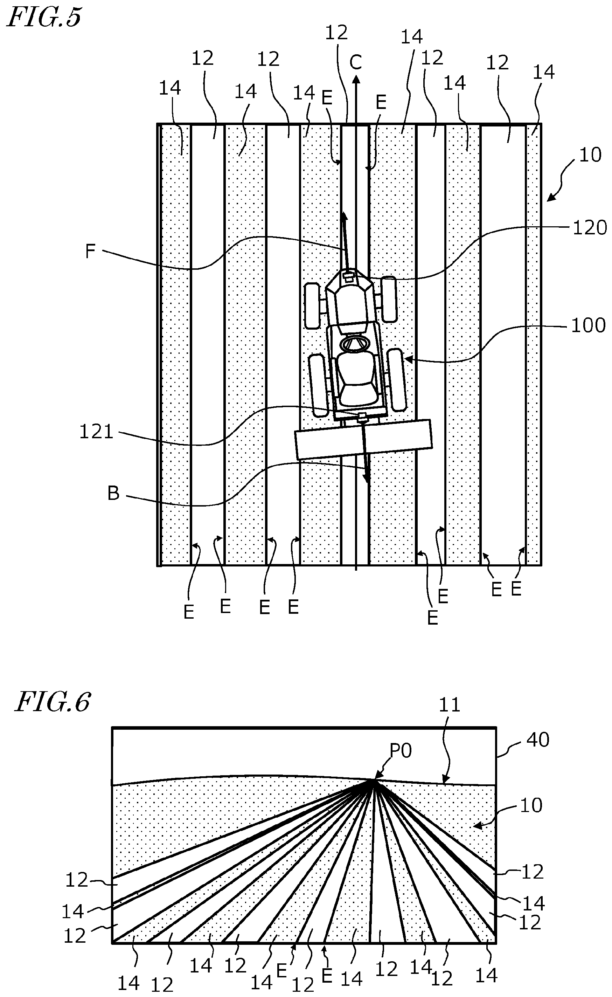

FIG. **5** is a plan view schematically showing a state where the forward traveling direction **F** for the agricultural machine **100** is inclined with respect to the direction in which the crop rows **12** extend. FIG. **6** schematically shows an example of the frontward image **40** acquired by the first imaging device **120** of the agricultural machine **100** shown in FIG. **5.** In the case where the forward traveling direction **F** for the agricultural machine **100** is inclined with respect to the direction in which the crop rows **12** extend (direction parallel to arrow C), the vanishing point **P0** is located in a right or left region of the image **40.** In the example shown in FIG. **6,** the vanishing point **P0** is located in the right region of the image **40.**

The travel control system according to an embodiment of the present disclosure further includes a processing device and a controller. The processing device detects the crop rows or the ridges included in the frontward image and the rearward image respectively acquired by the first imaging device **120** and the second imaging device **121** attached to the agricultural machine **100,** and linearly approximates the detected crop rows or ridges on the vehicle coordinate system to find a fitted line. The processing device further determines the travel path based on the two fitted lines found from the frontward and rearward images. The controller controls the travel of the agricultural machine **100** based on the travel path.

FIG. **3** schematically shows a state where the agricultural machine **100** is steered to reduce the positional deviation and the heading deviation with respect to the travel path (arrow **C**) and as a result, the position and orientation (angle in the yaw direction) of the agricultural machine **100** in the state shown in FIG. **5** are adjusted. The left and right wheels of the agricultural machine **100** in the state of FIG. **3** are respectively located on the lines indicated by arrows **L and R** in the work paths **14.** While the agricultural machine **100** is traveling along the travel path indicated by central arrow **C,** an automatic steering device in the agricultural machine **100** controls the steering angles of the wheels responsible for steering so that neither the front wheels **104F** nor the rear wheels **104R** deviate from the work paths **14.**

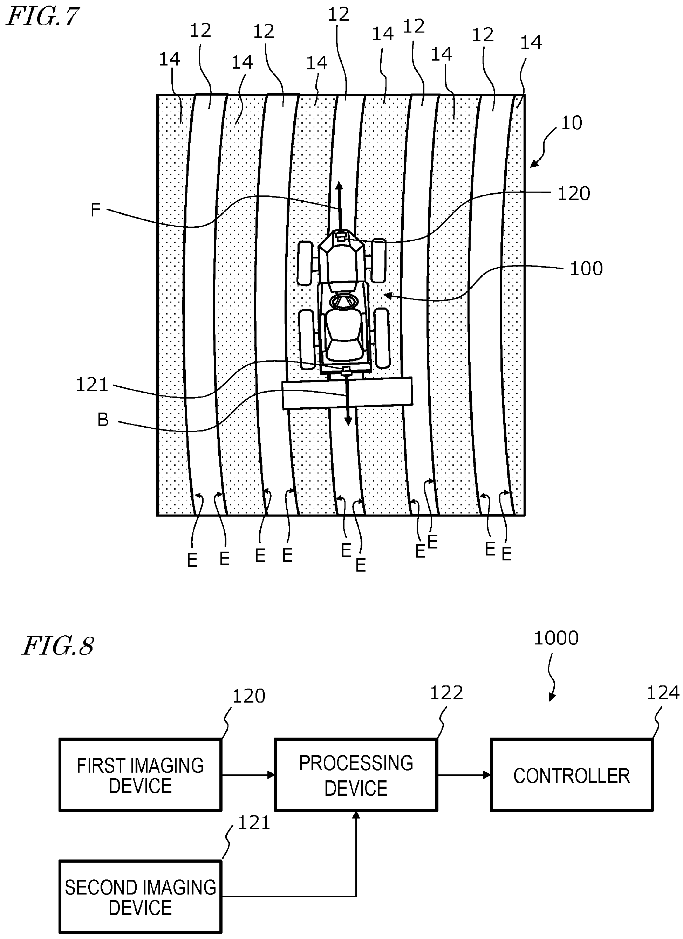

FIG. **7** is a plan view schematically showing a portion of a field in which a plurality of curved crop rows **12** are provided on the ground surface **10.** According to an embodiment of the present disclosure, even in a field in which such curved crop rows or ridges are formed, it is made possible to correctly detect the positions of the crop rows or ridges from the frontward and rearward images acquired by the two imaging devices and to precisely control the steering and the travel of the agricultural machine **100** along the crops rows or the ridges, owing to a travel path determination method described below. In other words, the travel path on which the agricultural machine **100** is to proceed can be appropriately generated. As a result, it is made possible, by automatic steering, to control the travel of the agricultural machine **100** so that the front wheels **104F** and the rear wheels **104R** of the agricultural machine **100** move along arrows **L** and **R** in the work paths **14** (that is, it is made possible to perform the row-following travel control).

Hereinafter, a configuration and an operation of the travel control system according to an embodiment of the present disclosure will be described in detail.

FIG. **8** is a block diagram showing an example configuration of a travel control system **1000** according to an embodiment of the present disclosure. The travel control system **1000** includes the first and second imaging devices **120** and **121,** a processing device **122,** and a controller **124.** The processing device **122** executes image processing on the first time-series images acquired by the first imaging device **120** and the second time-series images acquired by the second imaging device **121** to determine a travel path of the agricultural machine **100.** The controller **124** is configured to control the travel of the agricultural machine **100** based on the travel path or to control the travel of the agricultural machine **100** based on the output from the processing device **122.** The controller **124** may be implemented by an electronic control unit (ECU) for automatic steering control described below, and is included in, for example, a self-driving device that controls the travel of the agricultural machine **100.** The ECU is a computer for onboard use.

The processing device **122** may be implemented by an ECU for image recognition. The processing device **122** is connected to the first and second imaging devices **120** and **121** via serial signal lines, e.g., wire harnesses or the like, so as to receive image data that is output from the first and second imaging devices **120** and **121.** A portion of the image recognition processing that is executed by the processing device **122** may be executed inside each of the first and second imaging devices **120** and **121** (inside each of camera modules).

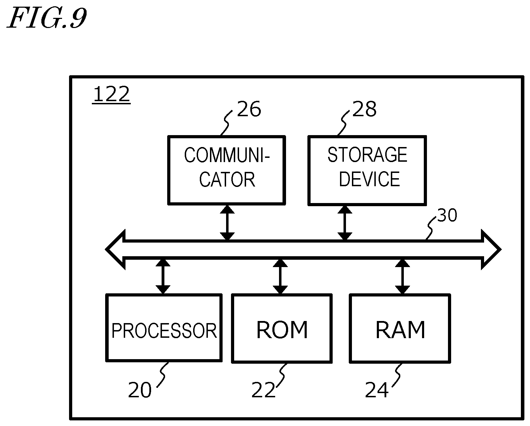

FIG. **9** is a block diagram showing an example hardware configuration of the processing device **122.** The processing device **122** includes a processor **20,** a ROM (Read Only Memory) **22,** a RAM (Random Access Memory) **24,** a communicator **26,** and a storage device **28.** These component elements are connected to one another via buses **30.**

The processor **20** is a semiconductor integrated circuit, and is referred to also as a central processing unit (CPU) or a microprocessor. The processor **20** may include an image processing unit (GPU). The processor **20** consecutively executes a computer program describing a group of predetermined instructions stored on the ROM **22** to realize processing that is needed for the detection of the crop rows or the ridges or for the generation of the travel path according to the present disclosure. A portion of, or the entirety of, the processor **20** may be an FPGA (Field Programmable Gate Array), an ASIC (Application Specific Integrated Circuit), or an ASSP (Application Specific Standard Product) each having a CPU mounted thereon.

The communicator **26** is an interface for performing data communication between the processing device **122** and an external computer. The communicator **26** can perform wired communication based on a CAN (Controller Area Network) or the like, or wireless communication complying with the Bluetooth (registered trademark) protocols and/or the Wi-Fi (registered trademark) standards.

The storage device **28** can store data on images acquired from the first and second imaging devices **120** and **121** or images which are under processing. Examples of the storage device **28** include a hard disc drive and a non-volatile semiconductor memory.

The hardware configuration of the processing device **122** is not limited to the above-described example. It is not required that a portion of, or an entirety of, the processing device **122** is mounted on the agricultural machine **100**. By utilizing the communicator **26**, one or more computers located outside the agricultural machine **100** may be allowed to function as a portion of, or an entirety of, the processing device **122**. For example, a server computer that is connected to a network may function as a portion of, or an entirety of, the processing device **122**. By contrast, a computer mounted on the agricultural machine **100** may perform all the functions that are required of the processing device **122**.

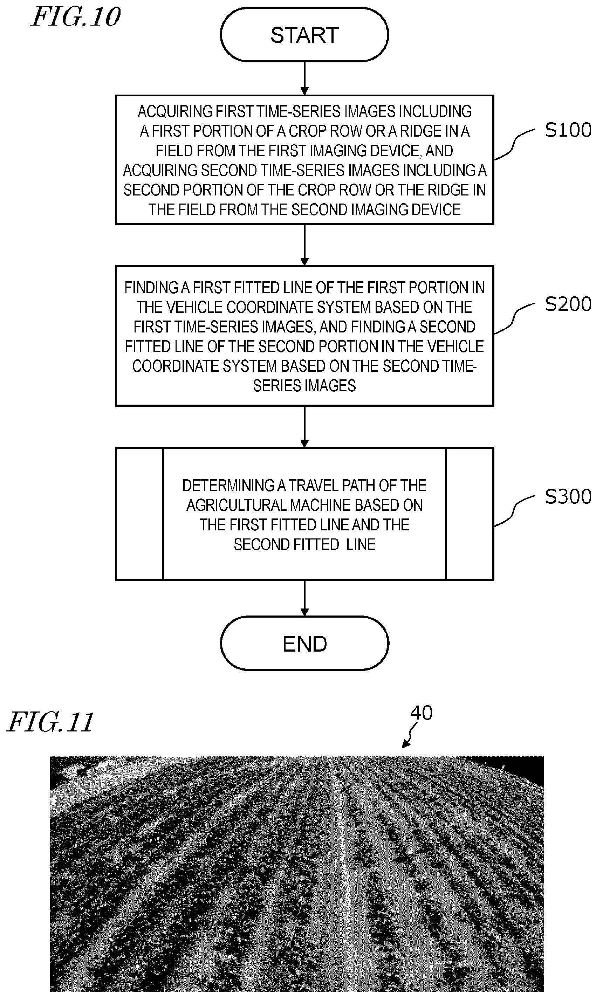

FIG. **10** is a flowchart showing an example algorithm by which the travel control system according to an embodiment of the present disclosure determines the travel path of the agricultural machine based on the results of detection of the crop rows or the ridges. In an embodiment of the present disclosure, the processing device **122** is configured to execute operations **S100, S200** and **S300** described below.

**(S100)** Acquires, from the first imaging device **120,** the first time-series images including the first portion of the crop rows or the ridges in the field, and acquires, from the second imaging device **121,** the second time-series images including the second portion of the crop rows or the ridges in the field.

**(S200)** Finds a first fitted line of the first portion in the vehicle coordinate system $\Sigma b$ based on the first time-series images, and finds a second fitted line of the second portion in the vehicle coordinate system $\Sigma b$ based on the second time-series images.

**(S300)** Determines the travel path of the agricultural machine based on the first fitted line and the second fitted line.

Hereinafter, a specific example of the operations **S100, S200** and **S300** will be described in detail.

The first time-series images form an aggregation of images that are chronologically acquired by the first imaging device **120** through image capturing. Each image is formed of a frame-by-frame group of pixels. This is also true with the second time-series images. For example, in the case where the first imaging device **120** outputs images at a frame rate of 30 frames/second, the processing device **122** can acquire new images with a period of about 33 milliseconds. This is applicable to the second image device **121**. As compared with a common automobile that travels on public roads, the agricultural machine **100**, such as a tractor or the like, travels in a field at a speed which is relatively low, e.g., about 10 kilometers per hour or lower. In the case where the speed is 10 kilometers per hour, a distance of about 6 centimeters is travelled in about 33 milliseconds. Therefore, the processing device **122** may acquire images with a period of, for example, about 100 to 300 milliseconds, and does not need to process all the frame of images captured by the first imaging device **120** and the second imaging device **121**. The period with which the images to be processed by the processing device **122** are acquired may be automatically changed by the processing device **122** in accordance with the travel speed of the agricultural machine **100**.

FIG. **11** shows an example of one-frame image **40,** among the first time-series images acquired by the first imaging device **120** mounted on the agricultural machine **100** (which is, in this example, a monocular camera). The image of FIG. **11** shows crop rows planted in the form of rows on the ground surface of a field. In this example, the crop rows are arranged essentially in parallel and at equal intervals on the ground surface, such that the camera optical axis $\lambda 1$ of the first imaging device **120** is inclined with respect to the forward traveling direction **F** for the agricultural machine **100** toward the ground surface (see FIG. **1** and FIG. **3**). In other words, the camera optical axis $\lambda 1$ does not need to be parallel to the forward traveling direction **F** for the agricultural machine **100** as described above, but may be incident on the ground surface frontward of the agricultural machine **100** in the forward traveling direction **F** therefor.

The second imaging device **121** also acquires an image similar to the image **40,** and the image acquired by the second imaging device **121** shows crop rows planted in the form of rows on the ground surface of the field and arranged essentially in parallel and at equal intervals. The camera optical axis $\lambda 2$ of the second imaging device **121** is inclined with respect to the backward traveling direction **B** for the agricultural machine **100** toward the ground surface (see FIG. **1** and FIG. **3).** In other words, like the camera optical axis $\lambda 1$, the camera optical axis $\lambda 2$ does not need to be parallel to the backward traveling direction **B,** but may be incident on the ground surface frontward of the agricultural machine **100** in the backward traveling direction **B** therefor.

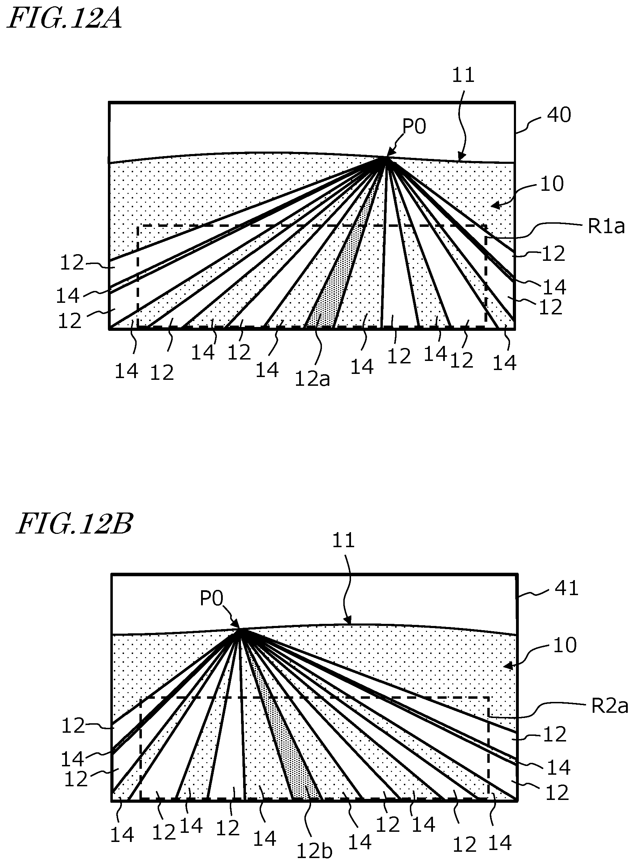

A case where the agricultural machine **100** travels in the field along the curved crop rows shown in FIG. **7** will be discussed. FIG. **12A** shows an example of frontward image **40** included in the first time-series images acquired by the first imaging device **120** during the travel of the agricultural machine **100**. FIG. **12B** shows an example of rearward image **41** included in the second time-series images acquired by the second imaging device **121** during the travel of the agricultural machine **100**. FIG. **12** and FIG. **12B** each show the crop rows **12** with straight lines for the sake of simplicity, but the crop rows **12** in each of actually captured images include curved portions.

In the operation **S100,** the processing device **122** acquires the first time-series images including the first portion of the crop rows **12** in the field from the first imaging device **120,** and acquires the second time-series images including the second portion of the crop rows or the ridges in the field from the second imaging device **121**. The first portion and the second portion of the crop rows **12** in the field are each a portion of the crop rows as a target of crop row detection required for the row-following travel control. A first portion **12a** of the crop rows **12** in the field is a portion located at the center of the plurality of crop rows **12** included in the frontward image **40** shown in FIG. **12A**. A second portion **12b** is a portion located at the center of the plurality of crop rows **12** included in the rearward image **41** shown in FIG. **12B.**

In the operation **S200,** the processing device **122** finds the first fitted line of the first portion **12a** in the vehicle coordinate system $\Sigma b$ based on the first time-series images, and finds the second fitted line of the second portion **12b** in the vehicle coordinate system $\Sigma b$ based on the second time-series images. For example, the processing device **122** can transform the first time-series images and the second time-series images respectively into plan-view images and find a fitted line from each of the plan-view images. Now, an example method for transforming the first time-series images into first plan-view images will be described regarding the first imaging device **120**. This method can also be used to transform the second time-series images acquired by the second imaging device **121** into second plan-view images. Such transformation is implemented by, for example, homography transformation (planar perspective projection). Homography transformation is a type of geometrical transformation, and allows a point on a given plane in a three-dimensional space to be transformed into a point on another optional plane. Each of plan-view images is an image as seen from above the ground surface on which the agricultural machine **100** travels, and may be referred to as an "overhead-view image". A plan-view image in an embodiment of the present disclosure is associated with the vehicle coordinate system $\Sigma b$.

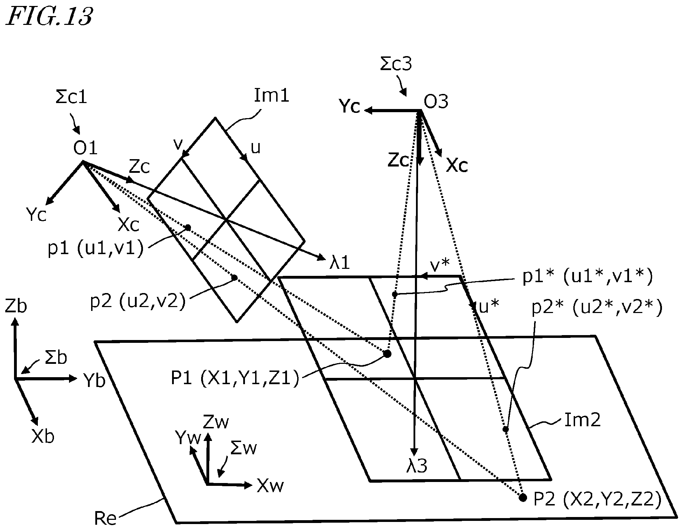

FIG. **13** is a perspective view schematically showing positions of each of the camera coordinate system $\Sigma c1$ of an imaging device at a first pose (position and orientation) and a camera coordinate system $\Sigma c3$ of an imaging device at a second pose, with respect to the reference plane **Re**. FIG. **13** also shows the vehicle coordinate system $\Sigma b$. In the illustrated example, the camera coordinate system $\Sigma c1$ is inclined so that a $Zc$ axis thereof obliquely crosses the reference plane **Re**. The imaging device at the first pose corresponds to the first imaging device **120** mounted on the agricultural machine **100**. By contrast, the camera coordinate system $\Sigma c3$ has a $Zc$ axis thereof orthogonal to the reference plane **Re**. In the case where the agricultural machine **100** does not rotate in the pitch direction or the roll direction, a plane including the $Xb$ axis and the $Yb$ axis of the vehicle coordinate system $\Sigma b$ (hereinafter, referred to as a "vehicle coordinate system plane") is parallel to the reference plane **Re**. Therefore, the $Zc$ axis of the camera coordinate system $\Sigma c3$ is also orthogonal to the vehicle coordinate system plane. In other words, the camera coordinate system $\Sigma c3$ is located so as to acquire an overhead-view image as seen from right above the reference plane **Re** or the vehicle coordinate system plane along the normal direction thereto.

At a position that is distant from the origin **O1** of the camera coordinate system $\Sigma c1$ by the focal length of the camera in the direction of the $Zc$ axis, a phantom image plane **Im1** exists. The image plane **Im1** is orthogonal to the $Zc$ axis and the camera optical axis $\lambda 1$. A pixel position on the image plane **Im1** is defined by an image coordinate system having a **u** axis and a **v** axis that are orthogonal to each other. For example, it is assumed that a point **P1** and a point **P2** located on the reference plane **Re** have coordinates (X1,Y1,Z1) and (X2,Y2,Z2) respectively in the world coordinate system $\Sigma w$. In the example of FIG. **13,** the **Xw** axis and the **Yw** axis of the world coordinate system $\Sigma w$ are on the reference plane **Re**. Therefore, Z1=Z2=0. The reference plane **Re** is set so as to expand along the ground surface.

Through perspective projection based on a pinhole camera model, the point **P1** and the point **P2** on the reference plane **Re** are transformed, respectively, into a point **p1** and a point **p2** on the image plane **Im1** of the imaging device at the first pose. On the image plane **Im1,** the point **p1** and the point **p2** are at pixel positions indicated by coordinates (u1,v1) and (u2,v2), respectively.

In the case where the imaging device is at the second pose, a phantom image plane **Im2** exists at a position that is distant from the origin **O3** of the camera coordinate system $\Sigma c3$ by the focal length of the camera in the direction of the $Zc$ axis. In this example, the image plane **Im2** is parallel to the reference plane **Re,** and is located on the vehicle coordinate system plane. A pixel position on the image plane **Im2** is defined by the vehicle coordinate system $\Sigma b$. The vehicle coordinate system $\Sigma b$ has a unit of, for example, a meter. Through perspective projection, the point **P1** and the point **P2** on the reference plane **Re** are transformed, respectively, into a point **p1\*** and a point **p2\*** on the image plane **Im2**. On the image plane **Im2,** the point **p1\*** and point **p2\*** are at pixel positions indicated by coordinates (u1\*,v1\*) and (u2\*,v2\*) on the vehicle coordinate system $\Sigma b$, respectively.

Once the relative positions of the camera coordinate systems $\Sigma c1$ and $\Sigma c2$ with respect to the reference plane **Re** (world coordinate system $\Sigma w$) are given, from a given point (u,v) on the image plane **Im1,** a point (u\*,v\*) corresponding thereto on the image plane **Im2** can be found through homography transformation. In the case where the point coordinates are expressed by a homogeneous coordinate system, such homography transformation is defined by a transformation matrix H of 3 rows × 3 columns.

[eq. 1]

$$\begin{pmatrix} u * \\ v * \\ 1 \end{pmatrix} = H \begin{pmatrix} u \\ v \\ 1 \end{pmatrix}$$

The contents of the transformation matrix H are defined by numerical values of $h_{11}$, $h_{12}$, ..., $h_{32}$, as indicated below.

[eq. 2]

$$\begin{pmatrix} u * \\ v * \\ 1 \end{pmatrix} = \begin{pmatrix} h11 & h12 & h13 \\ h21 & h22 & h23 \\ h31 & h32 & 1 \end{pmatrix} \begin{pmatrix} u \\ v \\ 1 \end{pmatrix}$$

The eight numerical values ($h_{11}$, $h_{12}$, ..., $h_{32}$) can be calculated by a known algorithm once an image of a calibration board that is placed on the reference plane **Re** is captured by the imaging device attached to the agricultural machine **100**.

In the case where a point on the reference plane **Re** has coordinates (X,Y,0), the coordinates of the corresponding points on the camera image planes **Im1** and Im2 are associated with the point (X,Y,0) by respective homography transformation matrices H1 and H2, as indicated by equation 3 and equation 4 below.

[eq. 3]

$$\begin{pmatrix} u \\ v \\ 1 \end{pmatrix} = H1 \begin{pmatrix} X \\ Y \\ 1 \end{pmatrix}$$

[eq. 4]

$$\begin{pmatrix} u * \\ v * \\ 1 \end{pmatrix} = H2 \begin{pmatrix} X \\ Y \\ 1 \end{pmatrix}$$

From the above two equations, the following equation is derived. As is clear from this equation, the transformation matrix H is equal to H2H1$^{-1}$. H1$^{-1}$ is an inverse of H1.

[eq. 5]

$$\begin{pmatrix} u * \\ v * \\ 1 \end{pmatrix} = H2H1^{-1} \begin{pmatrix} u \\ v \\ 1 \end{pmatrix}$$

The contents of the transformation matrices H1 and H2 depend on the reference plane **Re**. Therefore, when the position of the reference plane **Re** changes, the contents of the transformation matrix H also change.

By utilizing such homography transformation, a plan-view image of the ground surface can be generated from an image of the ground surface acquired by the imaging device at the first pose (imaging device attached to the agricultural machine). In other words, through the homography transformation, coordinates of a given point on the image plane **Im1** of the imaging device can be transformed into coordinates of a point that is on the image plane **Im2** of a phantom imaging device at a predetermined pose with respect to the reference plane **Re**.

After calculating the contents of the transformation matrix H, the processing device **122** executes a software program based on the aforementioned algorithm to generate, from time-series images output from the imaging device, an overhead-view image of the ground surface **10** as seen from above. Before the processing of generating the overhead-view image, pre-processing such as white balancing, noise reduction or the like may be applied to the time-series images.

In the above description, it is assumed that points in the three-dimensional space (e.g., **P1, P2**) are all located on the reference plane **Re** (e.g., Z1=Z2=0). In the case where the height of a crop with respect to the reference plane **Re** is non-zero, in the post-homography transformation plan-view image, the position of a corresponding point is shifted from a proper position thereof. In order to suppress an increase in the amount of shift, it is desirable that the height of the reference plane **Re** is close to the height of the crop as a target of detection. On the ground surface **10,** bumps and dents, e.g., ridges, furrows, trenches or the like, may exist. In such a case, the reference plane **Re** may be offset upward from the bottoms of such bumps and dents. The offset distance may be appropriately set depending on the bumps and dents of the ground surface **10** on which crops are planted.

When the vehicle body **110** (see FIG. **1**) makes a motion of roll or pitch while the agricultural machine **100** is traveling on the ground surface **10,** the pose of the imaging device **120** is changed. Therefore, the contents of the transformation matrix H may change. In such a case, the rotation angle of the roll and the pitch of the vehicle body **110** can be measured by an inertial measurement unit (IMU), so that the transformation matrix H1 and the transformation matrix H2 are corrected in accordance with the change in the pose of the imaging device.

The processing device **122** can transform the second time-series images acquired by the second imaging device **121** into the second plan-view images by a method substantially the same as the method used to transform the first time-series images acquired by the first imaging device **120** into the first plan-view images.

In this manner, the processing device **122** transforms the first time-series images and the second time-series images respectively into the first plan-view images and the second plan-view images on the vehicle coordinate system Σ**b**. In other words, the processing device **122** generates the first plan-view images and the second plan-view images on the vehicle coordinate system Σ**b** respectively from the first time-series images and the second time-series images.

Next, the processing device **122** finds the first fitted line and the second fitted line respectively from the first plan-view images and the second plan-view images on the vehicle coordinate system Σ**b**.

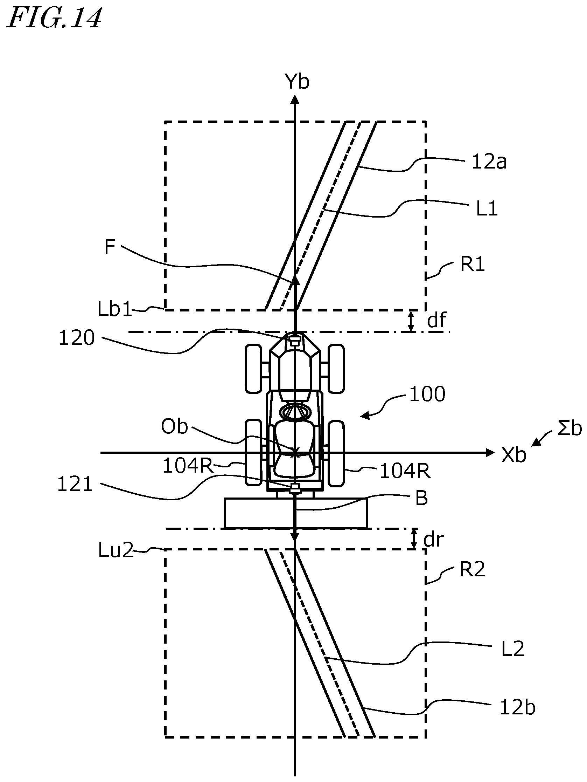

FIG. **14** is a plan view schematically showing positions, in the vehicle coordinate system Σ**b,** of each of a first region of interest **R1** and a second region of interest **R2** respectively included in the first plan-view images and the second plan-view images, with respect to and the agricultural machine **100**. As described above, the first plan-view images and the second plan-view images are associated with the vehicle coordinate system Σ**b**. The first plan-view images include the first region of interest **R1,** and the second plan-view images include the second region of interest **R2**. An "region of interest" is a region that is a target of image processing (or image recognition) to be executed by the processing device **122**. FIG. **14** shows the first region of interest **R1** and the second region of interest **R2** respectively with dashed-line rectangular regions. In the vehicle coordinate system Σ**b,** the first region of interest **R1** is located frontward of the agricultural machine **100,** and the second region of interest **R2** is located rearward of the agricultural machine **100**. On the vehicle coordinate system Σ**b,** the first region of interest **R1** does not overlap the second region of interest **R2**. Note that on the vehicle coordinate system Σ**b,** the first plan-view images and the second plan-view images may partially overlap each other.

A distance **df** between a straight line **Lb1** defining a bottom end of the first region of interest **R1** and a front end of the agricultural machine **100,** and/or a distance **dr** between a straight line **Lu2** defining a top end of the second region of interest **R2** and a rear end of the agricultural machine **100,** may each be set to, for example, a range of 1 meter to 2 meters. In the case where an implement is attached to the agricultural machine **100,** the rear end of the agricultural machine **100** is located at an outer edge of the implement. A length in the direction of the **Xb** axis of each of the first region of interest **R1** and the second region of interest **R2** may be set to, for example, a range of 3 meters to 5 meters, and a length in the direction of the **Yb** axis of each of the first region of interest **R1** and the second region of interest **R2** may be set to, for example, a range of 3 meters to 5 meters. From the point of view of generating a local travel path, it is preferred to set the regions of interest to be small.

The processing device **122** may adaptably change the size (or the range) of at least one of the first region of interest **R1** and the second region of interest **R2** in accordance with the travel speed of the agricultural machine **100**. The processing device **122** may also adaptably change at least one of the distances **df** and **dr** described above in accordance with the travel speed of the agricultural machine **100**. The processing device **122** may set the first region of interest **R1** and the second region of interest **R2** on the vehicle coordinate system Σ**b** so that as the travel speed of the agricultural machine **100** is higher, the distances **df** and **dr** are each shorter and the sizes of the first region of interest **R1** and the second region of interest **R2** are each smaller. With such settings, the regions of interest having sizes in accordance with the travel speed of the agricultural machine **100** can be set on the vehicle coordinate system Σ**b**. Therefore, the generation of a local travel path may be made easier. Such a local travel path is advantageous for the row-following travel control along the curved crop rows or ridges.

FIG. **12A** shows a region **R1a** in the frontward image **40** with a dashed-line rectangular region. The region **R1a** corresponds to the first region of interest **R1** shown in FIG. **14**. FIG. **12B** shows a region **R2a** in the rearward image **41** with a dashed-line rectangular region. The region **R2a** corresponds to the second region of interest **R2** shown in FIG. **14**. A first portion **12a** of the crop row located in the first region of interest **R1** shown in FIG. **14** corresponds to the first portion **12a** of the crop row located in the region **R1a** included in the frontward image **40** shown in FIG. **12A**. A second portion **12b** of the crop row located in the second region of interest **R2** shown in FIG. **14** corresponds to the second portion **12b** of the crop row located in the region **R2a** shown in FIG. **12B**.

The processing device **122** finds a first fitted line L1 from the first portion **12a** located in the first region of interest **R1,** and finds a second fitted line **L2** from the second portion **12b** located in the second region of interest **R2**. The processing device **122** finds the fitted lines using, for example, the least squares method. In an embodiment of the present disclosure, the first fitted line **L1** linearly approximates the first portion **12a** located in the first region of interest **R1,** and corresponds to, for example, a line passing the center between edge lines at both of two ends of the first portion **12a**. Similarly, the second fitted line **L2** linearly approximates the second portion **12b** located in the second region of interest **R2,** and corresponds to, for example, a line passing the center between edge lines at both of two ends of the second portion **12b**.

An example of method for detecting a crop row formed in a field will be described. The processing device **122** generates an enhanced image, in which the color of the crop row as a target of the detection is enhanced, from time-series images with colors (time-series color images). This enhanced image is generated by, for example, converting RGB values of a one-frame image in the time-series images into a green excess index (ExG). The processing device **122** generates, from the enhanced image, a graph plotting the relationship between the ExG and the number of pixels in the image. The processing device **122** generates, from this graph, plan-view images as seen from above the ground surface. In the plan-view images, the pixels are classified into first pixels having an index value of the color of the crop row that is equal to, or higher than, a threshold value, and second pixels having an index value of the color of the crop row that is lower than the threshold value. Based on the index value of the first pixels, the processing device **122** determines the positions of the edge lines of the crop row. Based on the positions of the edge lines of the crop row, the processing device **122** finds the fitted line that linearly approximates the crop row.

An example of method for detecting a ridge formed in a field will be described. From a plurality of images, among the time-series images, captured at different times, the processing device **122** finds a first moving amount, in the image plane, of each of a plurality of features by feature matching. The processing device **122** further performs perspective projection of each of the plurality of features from the image plane onto a reference plane corresponding to the ground surface, and finds a second moving amount of each of the projected points in the reference plane, based on the first moving amount. Based on the second moving amount, the processing device **122** estimates the height of each of the plurality of features from the reference plane to detect the edge lines of the ridge on the ground surface. Based on the positions of the edge lines of the ridge, the processing device **122** finds a fitted line that linearly approximates the ridge.

The above-described example of method for detecting the crop row or the ridge is described in detail in International Publication WO2023/276227 by the present Applicant. The entirety of the disclosure of International Publication WO2023/276227 is incorporated herein by reference.

The method for detecting the crop row or the ridge formed in a field is not limited to the above-described example, and may be any of a wide variety of methods using known algorithms. For example, a method for linearly approximating a crop row is described in detail in Japanese Patent No. 2624390 granted to the present Applicant. The entirety of the disclosure of Japanese Patent No. 2624390 is incorporated herein by reference. Japanese Laid-Open Patent Publication No. 2016-146061 describes a method for detecting a line formed by steps of a ridge or grooves. The entirety of the disclosure of Japanese Laid-Open Patent Publication No. 2016-146061 is incorporated herein by reference.

In the above-described example of finding the fitted lines, the time-series images are converted into plan-view images (or overhead-view images), and then a fitted line of the crop row in the vehicle coordinate system is found from the plan-view images. The present disclosure is not limited to this. For example, the processing device **122** may find a first pre-fitted line that linearly approximates the first portion of the crop row in a first image coordinate system defining coordinates of pixels in the first time-series images, and may find a second pre-fitted line that linearly approximates the second portion of the crop row in a second image coordinate system defining coordinates of pixels in the second time-series images. The processing device **122** may perform coordinate transformation on the first pre-fitted line from the first image coordinate system into the vehicle coordinate system to find the first fitted line in the vehicle coordinate system, and may perform coordinate transformation on the second pre-fitted line from the second image coordinate system into the vehicle coordinate system to find the second fitted line in the vehicle coordinate system. In this manner, a pre-fitted line can be found from the time-series images, and coordinate transformation on the pre-fitted line can be performed from an image coordinate system into the vehicle coordinate system to find a fitted line in the vehicle coordinate system. With this method, the target of the coordinate transformation is not the entirety of the image but is the fitted line. Therefore, the computation load on the processing device **122** may be decreased.

In the operation **S300,** the processing device **122** determines the travel path of the agricultural machine **100** based on the first fitted line **L1** and the second fitted line **L2**. Hereinafter, implementation examples 1 and 2 will be described as specific examples of the operation **S300**.

(1. Implementation example 1)

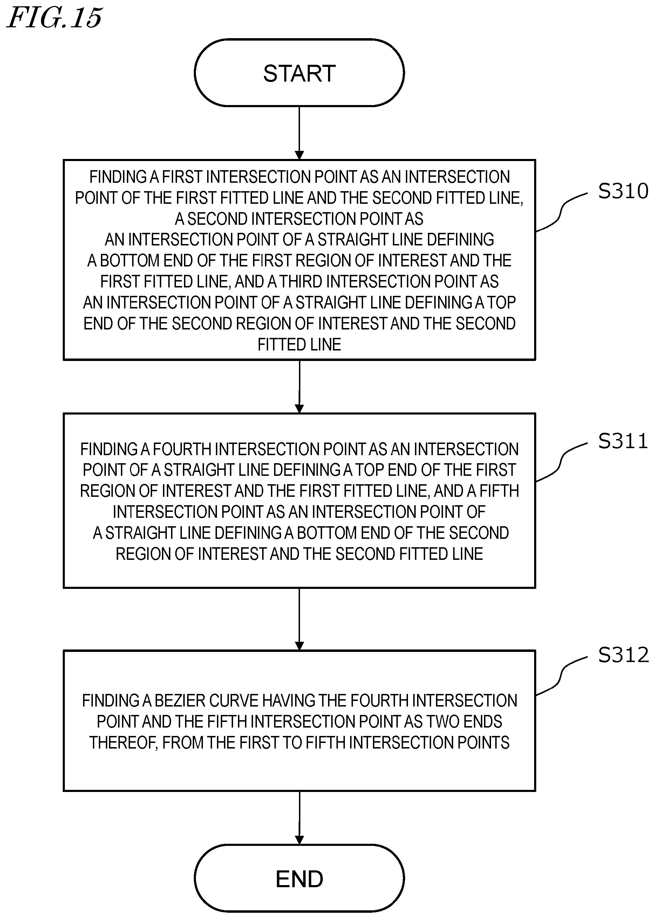

With reference to FIG. **15** through FIG. **19,** implementation example 1 of algorithm determining the travel path will be described.

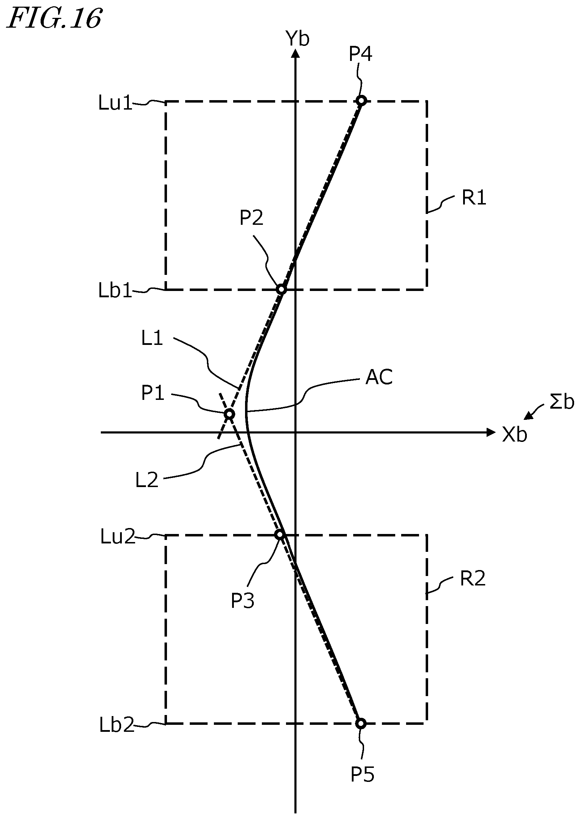

In implementation example 1, the processing device **122** finds an approximation curve from a plurality of points on the first fitted line and the second fitted line, and determines the travel path based on the approximation curve. An example of the fitted line is a Bezier curve. FIG. **15** is a flowchart showing an example algorithm in implementation example 1. FIG. **16** is a plan view schematically showing an example of the first fitted line **L1,** the second fitted line **L2** and an approximation curve **AC** on the vehicle coordinate system Σ**b**.

In an operation **S310,** based on the first fitted line **L1,** the second fitted line **L2,** the first region of interest **R1** and the second region of interest **R2** in the vehicle coordinate system Σ**b,** the processing device **122** finds a plurality of points including a first intersection point **P1,** which is an intersection point of the first fitted line **L1** and the second fitted line **L2.** From the plurality of points, the processing device **122** finds the approximation curve **AC**. The plurality of points include second and third intersection points **P2** and **P3** in addition to the first intersection point **P1**. The second intersection point **P2** is an intersection point of the straight line **Lb1** defining the bottom end of the first region of interest **R1** and the first fitted line **L1** in the vehicle coordinate system Σ**b**. The third intersection point **P3** is an intersection point of the straight line **Lu2** defining the top end of the second region of interest **R2** and the second fitted line **L2** in the vehicle coordinate system Σ**b**.

The processing device **122** can find the approximation curve based on the first, second and third intersection points **P1** through **P3**. Note that in implementation example 1, the processing device **122** finds other points on the first fitted line and the second fitted line in order to improve the computation precision of the approximation curve.

In an operation **S311,** the processing device **122** further finds a fourth intersection point **P4** and a fifth intersection point **P5**. In other words, the plurality of points in implementation example 1 further include the fourth and fifth intersection points **P4** and **P5** in addition to the first, second and third intersection points **P1** through **P3**. The fourth intersection point **P4** is an intersection point of a straight line **Lu1** defining a top end of the first region of interest **R1** and the first fitted line **L1** in the vehicle coordinate system Σ**b**. The fifth intersection point **P5** is an intersection point of a straight line **Lb2** defining a bottom end of the second region of interest **R2** and the second fitted line **L2**. The first, second, third, fourth and fifth intersection points **P1** through **P5** are each located at a pixel position represented by coordinates in the vehicle coordinate system Σ**b**.

In an operation **S312,** the processing device **122** finds the approximation curve from the first, second, third, fourth and fifth intersection points **P1** through **P5**. The processing device **122** in implementation example 1 finds a Bezier curve having the fourth intersection point **P4** and the fifth intersection point **P5** as two ends thereof. Specifically, the processing device **122** finds the Bezier curve from equation 6 below. Here, P(t) represents the equation of the curve, B represents the control point, and t represents the parameter. Equation 7 shows the Bernstein basis polynomial. The first, second, third, fourth and fifth intersection points **P1** through **P5** are each a control point. FIG. **16** shows an example of Bezier curve found from these control points. Note that the approximation curve according to the present disclosure is not limited to the Bezier curve, and may be a curve such as, for example, a spline curve.

[eq. 6]

$$P(t) = \sum_{i=0}^{N-1} B_i J_{N-1,i}(t)$$

[eq. 7]

$$J_{N,i}(t) = \binom{N}{i} t^i (1-t)^{N-1}$$

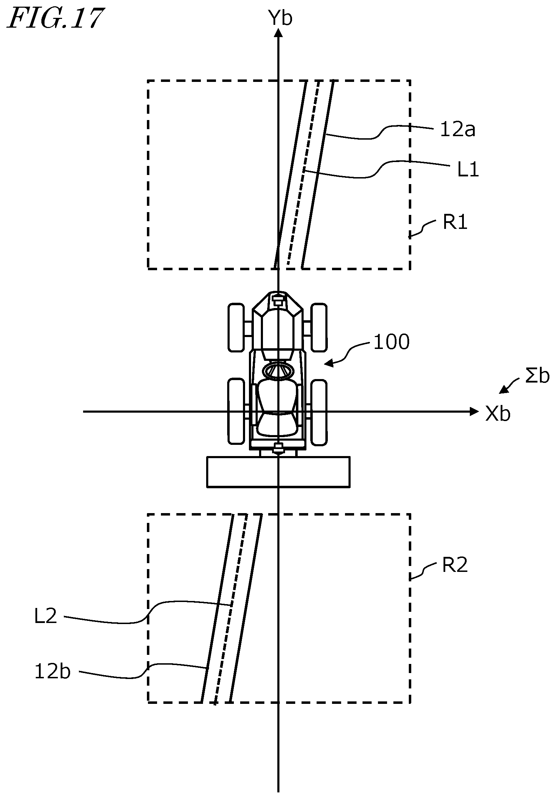

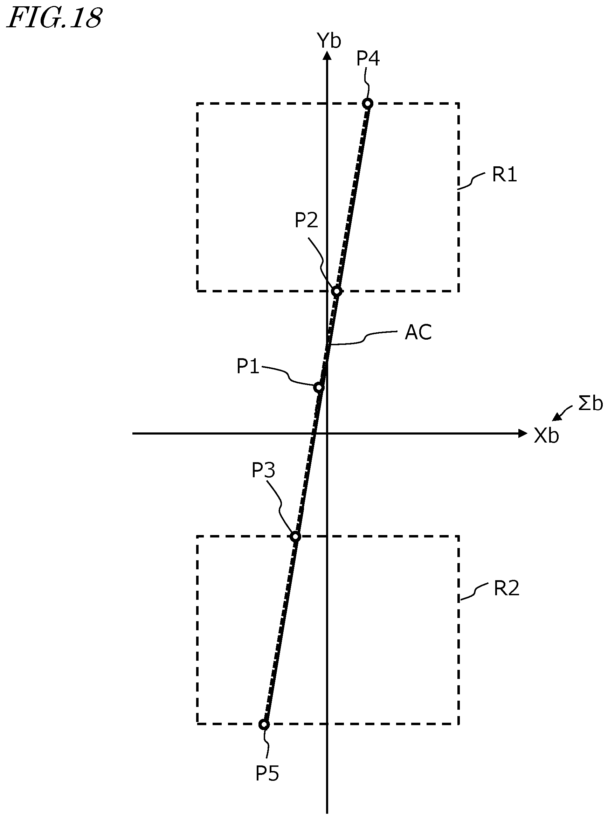

FIG. **17** is a plan view schematically showing the first portion **12a** and the second portion **12b** respectively located in the first region of interest **R1** and the second region of interest **R2** in the vehicle coordinate system Σ**b** while the

agricultural machine **100** is traveling along a straight crop row. FIG. **18** is a plan view schematically showing an example of the control points and an example of the approximation curve on the vehicle coordinate system Σ**b**. In implementation example 1, even in the case where the agricultural machine **100** travels along the straight crop rows as shown in FIG. **5,** the travel path can be determined. The processing device **122** finds the first fitted line **L1** that linearly approximates the first portion **12a** of the straight crop row and the second fitted line **L2** that linearly approximates the second portion **12b** of the straight crop row.

The processing device **122** finds the first, second, third, fourth and fifth intersection points **P1** through **P5,** which are control points, based on the first fitted line **L1,** the second fitted line **L2,** the first region of interest **R1** and the second region of interest **R2** on the vehicle coordinate system Σ**b**. In the case where the agricultural machine **100** travels along the straight crop row, as shown in FIG. **18,** the first, second, third, fourth and fifth intersection points **P1** through **P5** are arranged generally straight. Therefore, the approximation curve **AC** is extremely close to being straight. The processing device **122** can find the approximation curve **AC** from the first, second, third, fourth and fifth intersection points **P1** through **P5**.

In this manner, the processing device **122** determines the approximation curve **AC** found on the vehicle coordinate system Σ**b** as the travel path. The processing device **122** generates the travel path while finding an approximation curve at an interval of, for example, 200 milliseconds.

The controller **124** controls the travel of the agricultural machine **100** based on the travel path determined by the processing device **122**. In other words, the controller **124** controls the travel of the agricultural machine **100** based on the travel path set on the vehicle coordinate system Σ**b**.

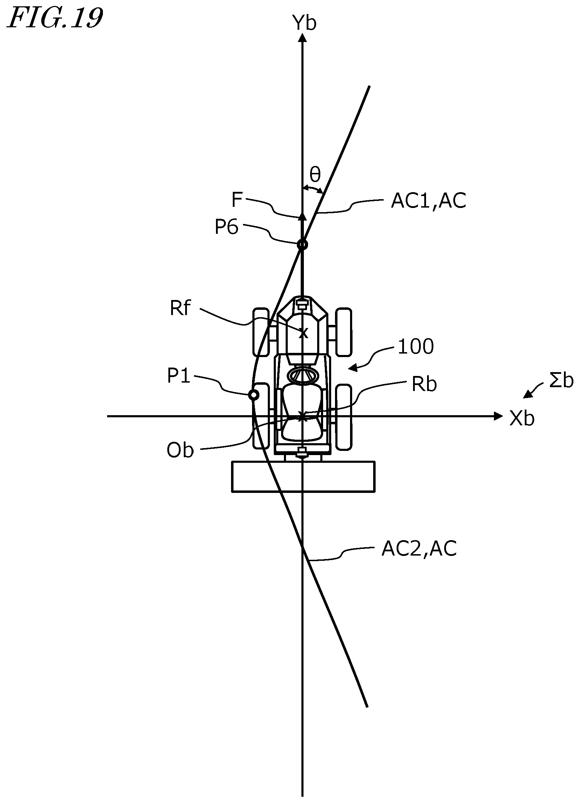

FIG. **19** is a plan view provided to describe the row-following travel control along the travel path set on the vehicle coordinate system Σ**b**. The approximation curve **AC** (that is, the travel path) on the vehicle coordinate system Σ**b** includes a first curved portion **AC1** located on the side of the first region of interest **R1** with respect to the first intersection point **P1** and a second curved portion **AC2** located on the side of the second region of interest **R2** with respect to the first intersection point **P1**. The origin **Ob** of the vehicle coordinate system Σ**b** in an embodiment of the present disclosure is on the rear wheel axis of the agricultural machine **100** in a plan view as seen from above the ground surface on which the agricultural machine **100** travels. In the present disclosure, the origin **Ob,** of the vehicle coordinate system Σ**b,** on the rear wheel axis may be referred to as a "rear reference point **Rb**".

The controller **124** controls the travel of the agricultural machine **100** based on the deviation between the origin **Ob** of the vehicle coordinate system Σ**b** (or the rear reference point **Rb**) and the second curved portion **AC2**. In other words, the controller **124** controls the position of the agricultural machine **100** so that the origin **Ob** of the vehicle coordinate system Σ**b** approaches the second curved portion **AC2**. Specifically, the controller **124** controls the position of the agricultural machine **100** so as to minimize the distance from the origin **Ob** of the vehicle coordinate system Σ**b** to a tangent of a given point among a group of points on the second curved portion **AC2,** that is, so as to minimize the length of the vertical line from the origin **Ob** to the tangent.

The controller **124** may control the travel of the agricultural machine **100** further based on the heading deviation between the direction in which a tangent of a given point among the group of points on the first curved portion **AC1** extends and the orientation of the agricultural machine **100**. For example, the controller **124** controls the pose of the agricultural machine **100** so as to minimize the angle $\theta$ made by a tangent of the first curved portion **AC1** at a sixth intersection point **P6,** at which the first curved portion **AC1** and the **Yb** axis of the vehicle coordinate system Σ**b** cross each other, and arrow **F** representing the forward traveling direction for the agricultural machine **100**.

Conventionally, a frontward image acquired by an imaging device that captures an image of an area frontward of the agricultural machine **100** is processed to detect a crop row or a ridge, and the position of the crop row or the ridge is estimated based on the results of detection of the crop row or the ridge. Based on the results of estimation, the travel path is determined. However, in the case where the crop row or the ridge includes a curved portion, such a method makes it difficult to precisely control the steering and travel of the agricultural machine **100** along such a curved crop row or ridge. In addition, in the case of the curved crop row or ridge, such a method makes it difficult to apply an automatic steering technique using a positioning system such as GNSS or the like.

According to implementation example 1, a frontward image and a rearward image acquired by two imaging devices respectively capturing the images of an area frontward of the agricultural machine **100** and an area rearward of the agricultural machine **100** are processed, so that the precision of estimation of the position of the crop row, which is a target of following, may be improved. As a result, even in a field where curved crop rows or ridges are formed, the steering and the travel of the agricultural machine **100** along such curved crop rows or ridges can be precisely controlled. Such row-following travel control allows precise automatic steering to be performed in an environment where an automatic steering technique using the positioning system such as GNSS or the like is not easily applicable.

(2. Implementation example 2)

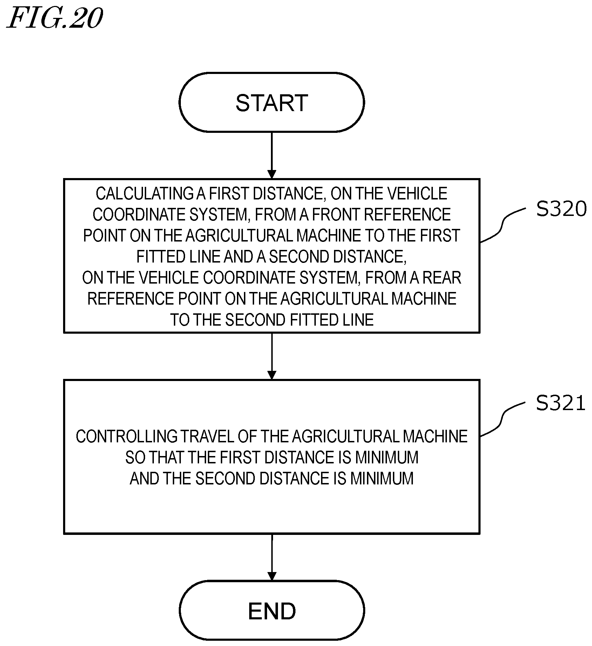

With reference to FIG. **20** through FIG. **22,** implementation example 2 of algorithm determining the travel path will be described.

Unlike in implementation example 1, the processing device **122** in implementation example 2 does not generate the approximation curve from the first and second fitted lines. Instead, the controller **124** directly controls the travel of the agricultural machine **100** based on the first and second fitted lines found by the processing device **122**. Therefore, in implementation example 2, the first and second fitted lines will be referred to as "travel paths". As can be seen, the "travel path" according to the present disclosure encompasses the first and second fitted lines in a broad sense.

The controller **124** in implementation example 2 controls the travel of the agricultural machine **100** based on a first distance, on the vehicle coordinate system Σ**b,** from a front reference point on the agricultural machine **100** to the first fitted line and a second distance, on the vehicle coordinate system Σ**b,** from a rear reference point on the agricultural machine **100** to the second fitted line.

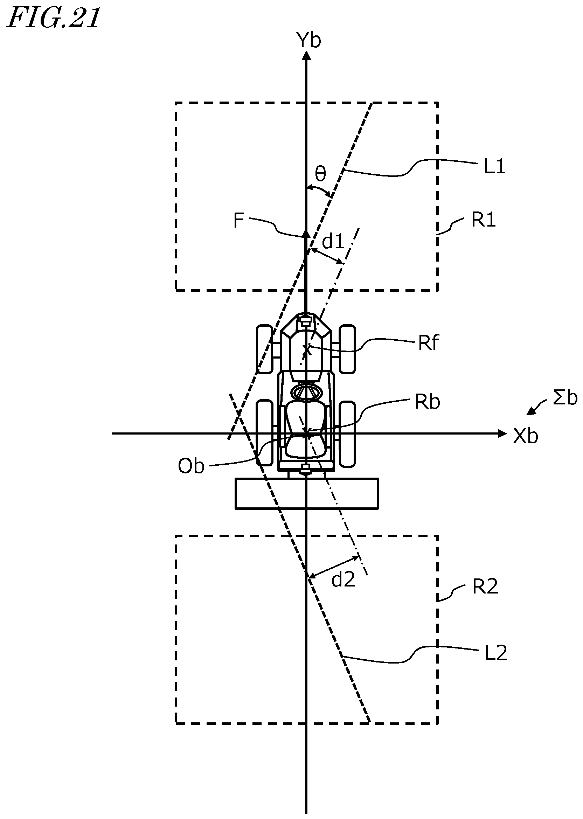

FIG. **20** is a flowchart showing an example algorithm in implementation example 2. FIG. **21** is a plan view schematically showing an example of positions of the first fitted line **L1,** the second fitted line **L2,** a front reference point **Rf** and a rear reference point **Rb** on the vehicle coordinate system Σ**b,** with respect to the agricultural machine **100**.

In an operation **S320,** the controller **124** independently, or the controller **124** and the processing device **122** in cooperation with each other, find a first distance **d1,** on the vehicle coordinate system Σ**b,** from the front reference point **Rf** on the agricultural machine **100** to the first fitted line **L1** and a distance **d2,** on the vehicle coordinate system Σ**b,** from the rear reference point **Rb** on the agricultural machine **100** to the second fitted line **L2.** The distance from such a reference point to such a fitted line corresponds to the length of the vertical line from the reference point to the fitted line.

As shown in FIG. **21,** in an embodiment of the present disclosure, in a plan view as seen from above the ground surface on which the agricultural machine **100** travels, the front reference point **Rf** is on a front wheel axis of the agricultural machine **100,** whereas the rear reference point **Rb** is on the rear wheel axis of the agricultural machine **100**. Note that the front reference point **Rf** and the rear reference point **Rb** are not limited to being located at such positions.

In an operation **S321,** the controller **124** controls the travel of the agricultural machine **100** so that the first distance **d1** is minimum and the second distance **d2** is minimum. In implementation example 2, the first distance **d1** and the second distance **d2** are each represented as a signed distance that defines the distance from the point to the straight line. The controller **124** estimates the heading deviation between the first fitted line **L1** and the orientation of the agricultural machine **100** based on the first distance **d1** with a sign, and also estimates the positional deviation between the rear reference point **Rb** and the second fitted line **L2** based on the second distance **d2** with a sign.

The controller **124** estimates the heading deviation of the agricultural machine **100** based on the magnitude and the sign of the first distance **d1**. The heading deviation is given by, for example, the angle θ made by the forward traveling direction for the agricultural machine **100** (direction of arrow **F**) and the first fitted line **L1.** In the example shown in FIG. **21,** the direction of arrow **F** matches the direction of the **Yb** axis in the vehicle coordinate system Σ**b**. The angle θ is an angle with, for example, the clockwise direction being a positive direction. The controller **124** estimates the positional deviation between the rear reference point **Rb** and the second fitted line **L2** based on the magnitude and the sign of the second distance **d2.** In other words, the controller **124** may estimate the deviation between the position of the agricultural machine **100** and the position of the second fitted line **L2** based on the magnitude and the sign of the second distance **d2**. Use of a signed distance allows the offset in the direction and in the position of the agricultural machine **100** with respect to the travel path to be estimated with relatively high precision. In this manner, the controller **124** controls the travel of the agricultural machine **100** so that the heading deviation and the positional deviation are each decreased.

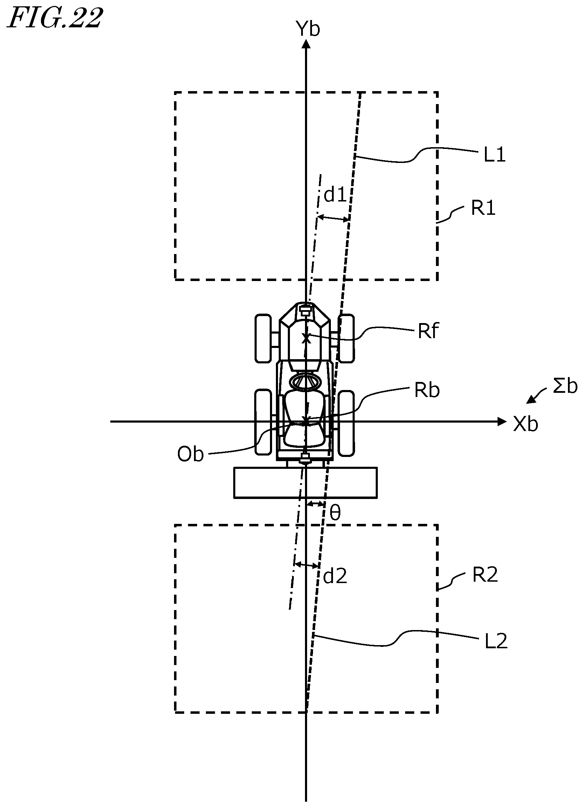

FIG. **22** is a plan view schematically showing the first region of interest **R1,** the second region of interest **R2,** the first fitted line **L1** and the second fitted line **L2** on the vehicle coordinate system Σ**b** while the agricultural machine **100** is traveling along a straight crop row. In implementation example 2, even in the case where the agricultural machine **100** travels along the straight crop rows as shown in FIG. **5,** the travel of the agricultural machine **100** can be controlled. The processing device **122** finds the first fitted line **L1** that linearly approximates the first portion of the straight crop row and the second fitted line **L2** that linearly approximates the second portion of the straight crop row.

In the case where the agricultural machine **100** travels along a straight crop row, as shown in FIG. **22,** the first and second fitted lines **L1** and **L2** are arranged generally straight. The controller **124** controls the travel of the agricultural machine **100** so that the first distance **d1** is minimum and the second distance **d2** is minimum. As described above, the controller **124** estimates the heading deviation of the agricultural machine **100** based on the magnitude and the sign of the first distance **d1,** and estimates the positional deviation between the rear reference point **Rb** and the second fitted line **L2** based on the magnitude and the sign of the second distance **d2.** In this manner, the agricultural machine **100** can travel along such a straight crop row.

According to implementation example 2, a frontward image and a rearward image acquired by two imaging devices respectively capturing the images of an area frontward of the agricultural machine **100** and an area rearward of the agricultural machine **100** are processed, so that the precision of estimation of the position of the crop row, which is a target of following, may be improved. As a result, even in a field where curved crop rows or ridges are formed, the steering and the travel of the agricultural machine **100** along such curved crop rows or ridges can be precisely controlled. Recently, an agricultural machine having a function of allowing the agricultural machine to travel straight in parallel to a reference line that connects a start point and an end point to each other has been developed. The algorithm according to implementation example 2 is easily implemented for such a function and is useful.

(3. Example configuration of the agricultural machine)

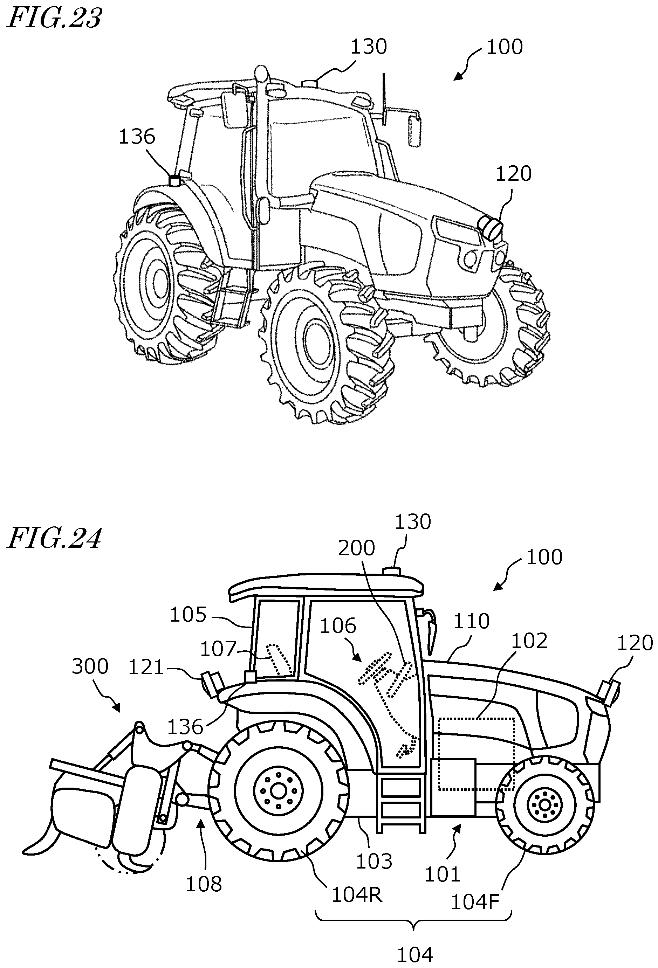

FIG. **23** is a perspective view showing an example of external appearance of the agricultural machine **100** according to an embodiment of the present disclosure. FIG. **24** is a side view schematically showing an example of the agricultural machine **100** to which the implement **300** is attached. The agricultural machine **100** according to an embodiment of the present disclosure is an agricultural tractor (work vehicle) having the implement **300** attached thereto. The agricultural machine **100** is not limited to a tractor, or does not need to have the implement **300** attached thereto. The travel control technique according to the present disclosure can exhibit excellent effects when being used in small-sized crop management machines and vegetable transplanters that may be used for tasks associated with the interridge land, such as, for example, ridge making, intertillage, ridging, weeding, side dressing, and preventive pest control.

The agricultural machine **100** according to an embodiment of the present disclosure includes the first and second imaging devices **120** and **121,** a positioning device **130,** and an obstacle sensor(s) **136**. Although one obstacle sensor **136** is illustrated in FIG. **24,** obstacle sensors **136** may be provided at a plurality of positions of the agricultural machine **100**.

As shown in FIG. **24,** the agricultural machine **100** includes the vehicle body 110, a prime mover (engine) **102**, and a transmission **103**. On the vehicle body **110,** the tires (wheels) **104** and a cabin **105** are provided. The tires **104** include the pair of the front wheels **104F** and the pair of the rear wheels **104R.** Inside the cabin **105**, a driver's seat **107**, a steering device **106**, an operational terminal **200**, and switches for manipulation are provided. One of the front wheels **104F** or the rear wheels **104R** may be crawlers instead of the tires. The agricultural machine **100** may be a four-wheel drive vehicle including the four wheels **104** as driving wheels, or a two-wheel drive vehicle including the pair of front wheels **104F** or the pair of rear wheels **104R** as driving wheels.

The positioning device **130** in an embodiment of the present disclosure includes a GNSS receiver. The GNSS receiver includes an antenna to receive a signal(s) from a GNSS satellite(s) and a processing circuit to determine the position of the agricultural machine **100** based on the signal(s) received by the antenna. The positioning device **130** receives a GNSS signal(s) transmitted from a GNSS satellite(s), and performs positioning on the basis of the GNSS signal(s). GNSS is a general term for satellite positioning systems, such as GPS (Global Positioning System), QZSS (Quasi-Zenith Satellite System, e.g., MICHIBIKI), GLONASS, Galileo, BeiDou, and the like. Although the positioning device **130** in an embodiment of the present disclosure is disposed above the cabin **105**, it may be disposed at any other position.

Furthermore, the positioning device **130** may complement the position data by using a signal from an IMU. The IMU can measure tilts and minute motions of the agricultural machine **100**. By complementing the position data based on the GNSS signal using the data acquired by the IMU, the positioning performance can be improved.

In the examples shown in FIGS. **23** and **24**, the obstacle sensor(s) **136** is provided at the rear of the vehicle body **110**. The obstacle sensor(s) **136** may be disposed at any other position than the rear of the vehicle body **110.** For example, one or more obstacle sensors **136** may be disposed at any position at the sides of the vehicle body **110,** the front of the vehicle body **110,** and the cabin **105**. The obstacle sensor(s) **136** detects objects around the agricultural machine **100**. Each obstacle sensor **136** may include a laser scanner or an ultrasonic sonar, for example. In the case where an obstacle exists at a position closer than a predetermined distance from the obstacle sensor **136,** the obstacle sensor **136** outputs a signal indicating the presence of the obstacle. A plurality of obstacle sensors **136** may be provided at different positions of the body of the agricultural machine **100**. For example, a plurality of laser scanners and a plurality of ultrasonic sonars may be disposed at different positions of the body. Providing such a large number of obstacle sensors **136** can reduce blind spots in monitoring obstacles around the agricultural machine **100**.

The prime mover **102** may be a diesel engine, for example. Instead of a diesel engine, an electric motor may be used. The transmission **103** can change the propulsion and moving speed of the agricultural machine **100** through a speed changing mechanism. The transmission **103** can also switch between forward travel and backward travel of the agricultural machine **100**.

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as a "steering angle") can cause a change in the forward traveling direction for the agricultural machine **100**. The steering angle of the front wheels **104F** can be changed by manipulation on the steering wheel. The power steering device includes a hydraulic device or an electric motor to supply an assisting force for changing the steering angle of the front wheels **104F.** When automatic steering is performed, under the control of a controller disposed in the agricultural machine **100,** the steering angle is automatically adjusted by the power of the hydraulic device or the electric motor.

A linkage device **108** is provided at the rear of the vehicle body **110**. The linkage device **108** may include, e.g., a three-point linkage (also referred to as a "three-point link" or a "three-point hitch"), a PTO (Power Take Off) shaft, a universal joint, and a communication cable. The linkage device **108** allows the implement **300** to be attached to, or detached from, the agricultural machine **100**. The linkage device **108** is able to raise or lower the three-point linkage device with, for example, a hydraulic device, thus controlling the position or pose of the implement **300**. Moreover, motive power can be sent from the agricultural machine **100** to the implement **300** via the universal joint. While towing the implement **300,** the agricultural machine **100** allows the implement **300** to perform a predetermined task. The linkage device may be provided frontward of the vehicle body **110**. In that case, the implement may be connected frontward of the agricultural machine **100**.

The implement **300** shown in FIG. **24** is a rotary cultivator, for example. The implement **300** to be towed by, or attached to, a tractor or other work vehicles when traveling in a manner of following rows may be any kind, so long as it is used in operations associated with the interridge land, such as ridge making, intertillage, ridging, weeding, side dressing, and preventive pest control.

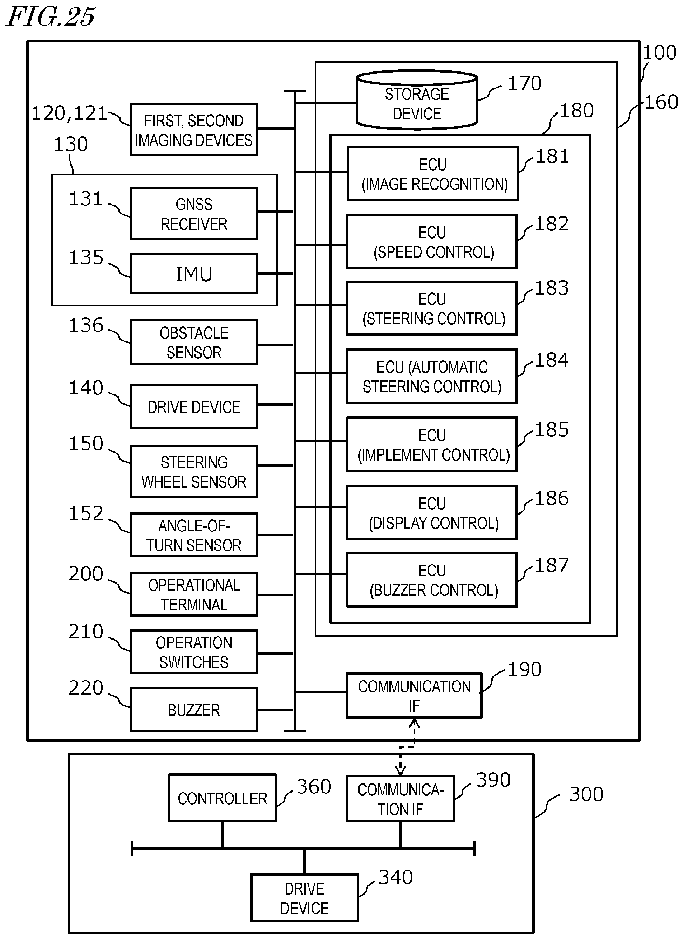

FIG. **25** is a block diagram showing an example of schematic configuration of the agricultural machine **100** and the implement **300**. The agricultural machine **100** and the implement **300** can communicate with each other via a communication cable that is included in the linkage device **108**.

In addition to the first imaging device **120,** the second imaging device **121,** the positioning device **130**, the obstacle sensor **136** and the operational terminal **200,** the agricultural machine **100** in the example of FIG. **25** includes a drive device **140,** a steering wheel sensor **150**, an angle-of-turn sensor **152**, a control system **160,** a communication interface (IF) **190**, operation switches **210**, and a buzzer **220**. The positioning device **130** includes a GNSS receiver **131** and an IMU **135**. The control system **160** includes a storage device **170** and a controller **180**. The controller **180** includes a plurality of electronic control units (ECU) **181** to **186**. The implement **300** includes a drive device **340**, a controller **380**, and a communication interface (IF) **390**. Note that FIG. **25** shows component elements which are relatively closely related to the operation of automatic steering or self-driving by the agricultural machine **100**, while other component elements are omitted from illustration.

The positioning device **130** performs positioning of the agricultural machine **100** by utilizing GNSS. In the case where the positioning device **130** includes an RTK receiver, not only GNSS signals transmitted from multiple GNSS satellites, but also a correction signal that is transmitted from a reference station is used. The reference station may be disposed around the field that is traveled by the agricultural machine **100** (e.g., at a position within 10 km of the agricultural machine **100).** The reference station generates a correction signal based on the GNSS signals received from the multiple GNSS satellites, and transmits the correction signal to the positioning device **130**. The GNSS receiver **131** in the positioning device **130** receives the GNSS signals transmitted from the multiple GNSS satellites. Based on the GNSS signals and the correction signal, the positioning device **130** calculates the position of the agricultural machine **100**, thus achieving positioning. Use of the RTK-GNSS enables positioning with an accuracy on the order of several centimeters of errors, for example. Positional information, including latitude, longitude and altitude information, is acquired through the highly accurate positioning by the RTK-GNSS. Note that the positioning method is not limited to the RTK-GNSS, but any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System).

The IMU **135** includes a 3-axis accelerometer and a 3-axis gyroscope. The IMU **135** may include a direction sensor such as a 3-axis geomagnetic sensor. The IMU **135** functions as a motion sensor which can output signals representing parameters such as acceleration, velocity, displacement, and pose of the agricultural machine **100**. Based not only on the GNSS signals and the correction signal but also on a signal that is output from the IMU **135**, the positioning device **130** can estimate the position and orientation of the agricultural machine **100** with a higher accuracy. The signal that is output from the IMU **135** may be used for the correction or complementation of the position that is calculated based on the GNSS signals and the correction signal. The IMU **135** outputs a signal more frequently than the GNSS signals. Utilizing this highly frequent signal allows the position and orientation of the agricultural machine **100** to be measured more frequently (e.g., about 10 Hz or above). Instead of the IMU **135**, a 3-axis accelerometer and a 3-axis gyroscope may be separately provided. The IMU **135** may be provided as a separate device from the positioning device **130**.

In addition to the GNSS receiver **131** and the IMU **135**, the positioning device **130** may include other kinds of sensors. Depending on the environment that is traveled by the agricultural machine **100**, it is possible to estimate the position and orientation of the agricultural machine **100** with a high accuracy based on data from such sensors.

For example, the drive device **140** includes various devices that are needed for the travel of the agricultural machine **100** and the driving of the implement **300,** e.g., the aforementioned prime mover **102,** the transmission **103,** a differential including a locking differential mechanism, the steering device **106,** and the linkage device **108**. The prime mover **102** includes an internal combustion engine such as, for example, a diesel engine. Instead of, or in addition to, the internal combustion engine, the drive device **140** may include an electric motor that is dedicated to traction purposes.

The steering wheel sensor **150** measures the angle of rotation of the steering wheel of the agricultural machine **100**. The angle-of-turn sensor **152** measures the angle of turn of the front wheels **104F,** which are the wheels responsible for steering. Measurement values provided by the steering wheel sensor **150** and the angle-of-turn sensor **152** are used for the steering control by the controller **180**.

The storage device **170** includes one or more storage media such as a flash memory or a magnetic disc. The storage device **170** stores various data that is generated by the sensors and the controller **180**. The data that is stored by the storage device **170** may include map data in the environment that is traveled by the agricultural machine **100,** and data on a travel path of automatic steering. The storage device **170** also stores a computer program(s) to cause the ECUs in the controller **180** to perform various operations described below. Such a computer program(s) may be provided for the agricultural machine **100** via a storage medium (e.g., a semiconductor memory, an optical disc or the like) or through telecommunication lines (e.g., the Internet). Such a computer program(s) may be marketed as commercial software.

The controller **180** includes a plurality of ECUs. The plurality of ECUs include an ECU **181** for image recognition, an ECU **182** for speed control, an ECU **183** for steering control, an ECU **184** for automatic steering control, an ECU **185** for implement control, an ECU **186** for display control, and an ECU **187** for buzzer control. The ECU **181** for image recognition functions as a processing device of the travel control system. The ECU **182** controls the prime mover **102**, the transmission **103,** and brakes included in the drive device **140**, thus controlling the speed of the agricultural machine **100**. The ECU **183** controls the hydraulic device or the electric motor included in the steering device **106** based on a measurement value of the steering wheel sensor **150**, thus controlling the steering of the agricultural machine **100.**

The ECU **184** functions as a controller of the travel control system. The ECU **184** executes computations and controls for realizing row-following travel, based on an output from the ECU **181** for image recognition. The ECU **184** executes computations and controls to achieve automatic steering driving, based on signals which are output from the positioning device **130**, the steering wheel sensor **150**, and the angle-of-turn sensor **152**. During the row-following travel or the automatic steering driving, the ECU **184** sends the ECU **183** a command to change the steering angle. In response to this command, the ECU **183** controls the steering device **106** to change the steering angle.

In order to cause the implement **300** to perform a desired operation, the ECU **185** controls the operation of the linkage device **108**. Also, the ECU **185** generates a signal to control the operation of the implement **300**, and transmits this signal from the communication IF **190** to the implement **300**. The ECU **186** controls displaying on the operational terminal **200**. For example, the ECU **186** causes a display device of the operational terminal **200** to present various indications, e.g., a map of the field, detected crop rows or ridges, the position and the travel path of the agricultural machine **100** in the map, pop-up notifications, and setting screens. The ECU **187** controls outputting of alarm sounds by the buzzer **220**.

Through the action of these ECUs, the controller **180** realizes driving via manual steering or automatic steering. During usual automatic steering driving, the controller **180** controls the drive device **140** based on the position of the agricultural machine **100** as measured or estimated by the positioning device **130** and the travel path stored on the storage device **170**. As a result, the controller **180** causes the agricultural machine **100** to travel along the travel path. By contrast, in a row-following control mode where travel is done along the rows, the ECU **181** for image recognition finds, from a detected crop row or ridge, the fitted line of the crop row or ridge, and generates a travel path based on the fitted line. The controller **180** performs an operation in accordance with this travel path.

The plurality of ECUs included in the controller **180** may communicate with one another according to a vehicle bus standard such as a CAN (Controller Area Network). Although the ECUs **181** to **187** are illustrated as individual blocks in FIG. **25,** each of these functions may be implemented by a plurality of ECUs. Alternatively, an onboard computer that integrates at least a portion of the functions of the ECUs **181** to **187** may be provided. The controller **180** may include ECUs other than the ECUs **181** to **187,** and any number of ECUs may be provided in accordance with functionality. Each ECU includes a control circuit including one or more processors.

The communication IF **190** is a circuit that performs communications with the communication IF **390** of the implement **300**. The communication IF **190** performs exchanges of signals complying with an ISOBUS standard such as, for example, ISOBUS-TIM between the communication IF **190** itself and the communication IF **390** of the implement **300**. This causes the implement **300** to perform a desired operation, or allows information to be acquired from the implement **300**. The communication IF **190** may communicate with an external computer via a wired or wireless network. The external computer may be a server computer in a farming support system which centralizes management of information concerning fields by using a cloud, and assists in agriculture by utilizing the data on the cloud, for example.

The operational terminal **200** is a terminal for the operator to perform a manipulation related to the travel of the agricultural machine **100** and the operation of the implement **300,** and may also be referred to as a virtual terminal (VT). The operational terminal **200** may include a display device such as a touch screen panel, and/or one or more buttons. By manipulating the operational terminal **200,** the operator can perform various manipulations of, for example, switching ON/OFF the automatic steering mode, switching ON/OFF the cruise control, setting an initial position of the agricultural machine **100,** setting a travel path, recording or editing a map, switching between 2WD and 4WD, switching ON/OFF the locking differential, and switching ON/OFF the implement **300**. At least a portion of these manipulations can also be realized by manipulating the operation switches **210**. Display on the operational terminal **200** is controlled by the ECU **186**.

The buzzer **220** is an audio output device to present an alarm sound for alerting the operator of an abnormality. For example, during automatic steering driving, the buzzer **220** presents an alarm sound when the agricultural machine **100** deviates from the travel path by a predetermined distance or more. Instead of the buzzer **220,** a loudspeaker of the operational terminal **200** may provide a similar function. The buzzer **220** is controlled by the ECU **186.**

The drive device **340** in the implement **300** performs an operation necessary for the implement **300** to perform a predetermined task. The drive device **340** includes devices adapted to the intended use of the implement **300,** e.g., a hydraulic device, an electric motor, or a pump. The controller **380** controls the operation of the drive device **340.** In response to a signal that is transmitted from the agricultural machine **100** via the communication IF **390,** the controller **380** causes the drive device **340** to perform various operations. Moreover, a signal that is in accordance with the state of the implement **300** may be transmitted from the communication IF **390** to the agricultural machine **100.**

In the above-described embodiments, the agricultural machine **100** may be an unmanned work vehicle which performs self-driving. In that case, component elements which are only required for human driving, e.g., the cabin, the driver's seat, the steering wheel, and the operational terminal, do not need to be provided in the agricultural machine **100.** The unmanned work vehicle may perform operations similar to the operations in the above-described embodiment via autonomous driving, or by remote manipulations by an operator.

A system that provides the various functions according to the embodiments can be mounted on an agricultural machine lacking such functions as an add-on. Such a system may be manufactured and sold independently from the agricultural machine. A computer program for use in such a system may also be manufactured and sold independently from the agricultural machine. The computer program may be provided as being stored on a computer-readable, non-transitory storage medium, for example. The computer program may also be provided through downloading via telecommunication lines (e.g., the Internet).

As described above, the present disclosure includes a travel control system, a work vehicle and a travel control method described in the following items.

[Item A1]

A travel control system, comprising:

a processing device configured to:

acquire first time-series images including a first portion of a crop row or a ridge in a field from a first imaging device attached to a work vehicle for agriculture so as to face in a first direction;
acquire second time-series images including a second portion of the crop row or the ridge from a second imaging device attached to the work vehicle so as to face in a second direction different from the first direction; and
execute image processing on the first time-series images and the second time-series images to determine a travel path of the work vehicle; and

a controller configured to control travel of the work vehicle based on the travel path,
wherein the processing device is configured to:

find a first fitted line of the first portion in a vehicle coordinate system fixed to the work vehicle, based on the first time-series images;
find a second fitted line of the second portion in the vehicle coordinate system, based on the second time-series images; and
determine the travel path based on the first fitted line and the second fitted line.

[Item A2]

The travel control system of item A1, wherein the processing device is configured to find an approximation curve from a plurality of points on the first fitted line and the second fitted line to determine the travel path based on the approximation curve.

[Item A3]

The travel control system of item A1 or A2, wherein the processing device is configured to:

find a first pre-fitted line that linearly approximates the first portion in a first image coordinate system defining coordinates of pixels of the first time-series images,
find a second pre-fitted line that linearly approximates the second portion in a second image coordinate system defining coordinates of pixels of the second time-series images,
perform coordinate transformation on the first pre-fitted line from the first image coordinate system into the vehicle coordinate system to find the first fitted line in the vehicle coordinate system, and
perform coordinate transformation on the second pre-fitted line from the second image coordinate system into the vehicle coordinate system to find the second fitted line in the vehicle coordinate system.

[Item A4]

The travel control system of item A1 or A2, wherein the processing device is configured to:

transform the first time-series images and the second time-series images respectively into first plan-view images and second plan-view images as seen from above a ground surface on which the work vehicle travels, and
find the first fitted line and the second fitted line respectively from the first plan-view images and the second plan-view images.

[Item A5]

The travel control system of item A4, wherein:

the first plan-view images include a first region of interest as a target of the image processing to be executed by the processing device,
the first plan-view images include a second region of interest as a target of the image processing to be executed by the processing device, and
the processing device is configured to find the first fitted line from the first portion located in the first region of interest, and finds the second fitted line from the second portion located in the second region of interest.

[Item A6]

The travel control system of item A5, wherein the processing device is configured to change a size of at least one of the first region of interest and the second region of interest in accordance with a travel speed of the work vehicle.

[Item A7]

The travel control system of item A5, wherein the first region of interest does not overlap the second region of interest on the vehicle coordinate system.

[Item A8]

The travel control system of item A5, wherein the processing device is configured to find the approximation curve from the plurality of points including a first intersection point as an intersection point of the first fitted line and the second fitted line.

[Item A9]

The travel control system of item A8, wherein the processing device is configured to:

find a second intersection point as an intersection point of a straight line defining a bottom end of the first region of interest and the first fitted line in the vehicle coordinate system,
find a third intersection point as an intersection point of a straight line defining a top end of the second region of interest and the second fitted line in the vehicle coordinate system, and
find the approximation curve from the first intersection point, the second intersection point and the third intersection point.

[Item A10]

The travel control system of item A9, wherein the processing device is configured to:

find a fourth intersection point as an intersection point of a straight line defining a top end of the first region of interest and the first fitted line, and find a fifth intersection point as an intersection point of a straight line defining a bottom end of the second region of interest and the second fitted line, and

find the approximation curve from the first intersection point, the second intersection point, the third intersection point, the fourth intersection point and the fifth intersection point.

[Item A11]

The travel control system of item A10, wherein the processing device is configured to find a Bezier curve having the fourth intersection point and the fifth intersection point as two ends thereof.

[Item A12]

The travel control system of item A11,

wherein the approximation curve in the vehicle coordinate system includes a first curved portion located on the side of the first region of interest with respect to the first intersection point and a second curved portion located on the side of the second region of interest with respect to the first intersection point, and
wherein the controller is configured to control the travel of the work vehicle based on a deviation between the origin of the vehicle coordinate system and the second curved portion.

[Item A13]

The travel control system of item A12, wherein as seen in a plan view seen from above the ground surface on which the work vehicle travels, the origin of the vehicle coordinate system is on a rear wheel axis of the work vehicle.

[Item A14]

The travel control system of item A12 or A13, wherein the controller is configured to control the travel of the work vehicle further based on a heading deviation between a direction in which a tangent of a given point on the first curved portion extends and an orientation of the work vehicle.

[Item A15]

The travel control system of any one of items A1 through A14, wherein the first direction is a forward direction for the work vehicle, and the second direction is a rearward direction for the work vehicle.

[Item A16]

A work vehicle, comprising:

a first imaging device;
a second imaging device; and
the travel control system of any one of items A1 through A15.

[Item A17]

A computer-implemented travel control method for a work vehicle, the travel control method causing a computer to execute:

acquiring first time-series images including a first portion of a crop row or a ridge in a field from a first imaging device attached to a work vehicle for agriculture so as to face in a first direction;
acquiring second time-series images including a second portion of the crop row or the ridge from a second imaging device attached to the work vehicle so as to face in a second direction different from the first direction; and
finding a first fitted line of the first portion in a vehicle coordinate system fixed to the work vehicle, based on the first time-series images;
finding a second fitted line of the second portion in the vehicle coordinate system, based on the second time-series images; and
determining a travel path of the work vehicle based on the first fitted line and the second fitted line.

[Item B1]

A travel control system. comprising:

a processing device configured to:

acquire first time-series images including a first portion of a crop row or a ridge in a field from a first imaging device attached to a work vehicle for agriculture so as to face in a first direction;
acquire second time-series images including a second portion of the crop row or the ridge from a second imaging device attached to the work vehicle so as to face in a second direction different from the first direction; and
execute image processing on the first time-series images and the second time-series images to determine a travel path of the work vehicle; and

a controller controlling travel of the work vehicle based on an output from the processing device;
wherein the processing device is configured to:

find a first fitted line of the first portion in a vehicle coordinate system fixed to the work vehicle, based on the first time-series images; and
find a second fitted line of the second portion in the vehicle coordinate system, based on the second time-series images; and

wherein the controller is configured to control the travel path of the work vehicle based on a first distance, on the vehicle coordinate system, from a front reference point on the work vehicle to the first fitted line and a second distance, on the vehicle coordinate system, from a rear reference point on the work vehicle to the second fitted line.

[Item B2]

The travel control system of item B1, wherein the controller is configured to control the travel of the work vehicle so that the first distance is minimum and the second distance is minimum.

[Item B3]

The travel control system of item B1,

wherein the first distance and the second distance are each a signed distance, and
wherein the controller is configured to estimate a heading deviation between the first fitted line and an orientation of the work vehicle, from the first signed distance, and estimate a positional deviation between the rear reference point and the second fitted line, from the second signed distance.

[Item B4]

The travel control system of any one of items B1 through B3, wherein as seen in a plan view seen from above a ground surface on which the work vehicle travels, the front reference point is on a front wheel axis of the work vehicle, and the rear reference point is on a rear wheel axis of the work vehicle.

[Item B5]

The travel control system of any one of items B1 through B4, wherein the processing device is configured to:

find a first pre-fitted line that linearly approximates the first portion in a first image coordinate system defining coordinates of pixels of the first time-series images,
find a second pre-fitted line that linearly approximates the second portion in a second image coordinate system defining coordinates of pixels of the second time-series images,
perform coordinate transformation on the first pre-fitted line from the first image coordinate system into the vehicle coordinate system to find the first fitted line in the vehicle coordinate system, and
perform coordinate transformation on the second pre-fitted line from the second image coordinate system into the vehicle coordinate system to find the second fitted line in the vehicle coordinate system.

[Item B6]

The travel control system of any one of items B1 through B4, wherein the processing device is configured to:

transform the first time-series images and the second time-series images respectively into first plan-view images and second plan-view images as seen from above a ground surface on which the work vehicle travels, and
find the first fitted line and the second fitted line respectively from the first plan-view images and the second plan-view images.

[Item B7]

The travel control system of item B6,

wherein the first plan-view images include a first region of interest as a target of the image processing to be executed by the processing device,
wherein the second plan-view images include a second region of interest as a target of the image processing to be executed by the processing device, and
wherein the processing device is configured to find the first fitted line from the first portion located in the first region of interest, and find the second fitted line from the second portion located in the second region of interest.

[Item B8]

The travel control system of item B7, wherein the processing device is configured to change a size of at least one of the first region of interest and the second region of interest in accordance with a travel speed of the work vehicle.

[Item B9]

The travel control system of item B7, wherein the first region of interest does not overlap the second region of interest on the vehicle coordinate system.

[Item B10]

The travel control system of any one of items B1 through B9, wherein the first direction is a forward direction for the work vehicle, and the second direction is a rearward direction for the work vehicle.

[Item B11]

A work vehicle, comprising:

a first imaging device;
a second imaging device; and
the travel control system of any one of items B1 through B10.

[Item B12]

A computer-implemented travel control method for a work vehicle, the travel control method causing a computer to execute:

acquiring first time-series images including a first portion of a crop row or a ridge in a field from a first imaging device attached to a work vehicle for agriculture so as to face in a first direction;
acquiring second time-series images including a second portion of the crop row or the ridge from a second imaging device attached to the work vehicle so as to face in a second direction different from the first direction; and
finding a first fitted line of the first portion in a vehicle coordinate system fixed to the work vehicle, based on the first time-series images;
finding a second fitted line of the second portion in the vehicle coordinate system, based on the second time-series images; and
controlling travel of the work vehicle based on a first distance, on the vehicle coordinate system, from a front reference point on the work vehicle to the first fitted line and a second distance, on the vehicle coordinate system, from a rear reference point on the work vehicle to the second fitted line.

**INDUSTRIAL APPLICABILITY**

The technique according to the present disclosure can be applied to agricultural machines, such as, for example, vehicles for crop management, vegetable transplanters, or tractors.

**REFERENCE SIGNS LIST**

**10:** ground surface, **11:** horizon, **12:** crop row, **12a:** first portion, **12b:** second portion, **20:** processor, **22:** ROM, **26:** communicator, **28:** storage device, **30:** bus, **40, 41:** image, **100:** agricultural machine, **102:** prime mover, **103:** transmission, **104:** tire, **104F:** front wheel, **104R:** rear wheel, **105:** cabin, **106:** steering device, **107:** driver's seat, **108:** linkage device, **110:** vehicle body, **120:** first imaging device, **121:** second imaging device, **122:** processing device, **124:** controller, **130:** positioning device, **131:** GNSS receiver, **136:** obstacle sensor, **140:** drive device, **150:** steering wheel sensor, **152:** angle-of-turn sensor, **160:** control system, **170:** storage device, **180:** controller, **181** through **187:** ECU, **200:** operational terminal, **210:** operation switches, **220:** buzzer, **300:** implement, **340:** drive device, **380:** controller, **1000:** travel control system, **AC:** approximation curve, **AC1:** first curved portion, **AC2:** second curved portion, **C:** travel path, **E:** edge line, **L1:** first fitted line, **L2:** second fitted line, **R1:** first region of interest, **R2:** second region of interest, **Rf:** front reference point, **Rb:** rear reference point

**Claims**

1. A travel control system, comprising:

   a processing device configured to:

   acquire first time-series images including a first portion of a crop row or a ridge in a field from a first imaging device attached to a work vehicle for agriculture so as to face in a first direction;
   acquire second time-series images including a second portion of the crop row or the ridge from a second imaging device attached to the work vehicle so as to face in a second direction different from the first direction; and
   execute image processing on the first time-series images and the second time-series images to determine a travel path of the work vehicle; and

   a controller configured to control travel of the work vehicle based on the travel path;
   wherein the processing device is configured to:

   find a first fitted line of the first portion in a vehicle coordinate system fixed to the work vehicle, based on the first time-series images;
   find a second fitted line of the second portion in the vehicle coordinate system, based on the second time-series images; and
   determine the travel path based on the first fitted line and the second fitted line.

2. The travel control system of claim 1, wherein the processing device is configured to find an approximation curve from a plurality of points on the first fitted line and the second fitted line to determine the travel path based on the approximation curve.

3. The travel control system of claim 1 or 2, wherein the processing device is configured to:

   find a first pre-fitted line that linearly approximates the first portion in a first image coordinate system defining coordinates of pixels of the first time-series images,
   find a second pre-fitted line that linearly approximates the second portion in a second image coordinate system defining coordinates of pixels of the second time-series images,
   perform coordinate transformation on the first pre-fitted line from the first image coordinate system into the vehicle coordinate system to find the first fitted line in the vehicle coordinate system, and
   perform coordinate transformation on the second pre-fitted line from the second image coordinate system into the vehicle coordinate system to find the second fitted line in the vehicle coordinate system.

4. The travel control system of claim 1 or 2, wherein the processing device is configured to:

   transform the first time-series images and the second time-series images respectively into first plan-view images and second plan-view images as seen from above a ground surface on which the work vehicle travels, and find the first fitted line and the second fitted line respectively from the first plan-view images and the second plan-view images.

5. The travel control system of claim 4, wherein:

   the first plan-view images include a first region of interest as a target of the image processing to be executed by the processing device,
   the first plan-view images include a second region of interest as a target of the image processing to be executed by the processing device, and
   the processing device is configured to find the first fitted line from the first portion located in the first region of interest, and finds the second fitted line from the second portion located in the second region of interest.

6. The travel control system of claim 5, wherein the processing device is configured to change a size of at least one of the first region of interest and the second region of interest in accordance with a travel speed of the work vehicle.

7. The travel control system of claim 5, wherein the first region of interest does not overlap the second region of interest on the vehicle coordinate system.

8. The travel control system of claim 5, wherein the processing device is configured to find the approximation curve from the plurality of points including a first intersection point as an intersection point of the first fitted line and the second fitted line.

9. The travel control system of claim 8, wherein the processing device is configured to:

   find a second intersection point as an intersection point of a straight line defining a bottom end of the first region of interest and the first fitted line in the vehicle coordinate system,
   find a third intersection point as an intersection point of a straight line defining a top end of the second region of interest and the second fitted line in the vehicle coordinate system, and
   find the approximation curve from the first intersection point, the second intersection point and the third intersection point.

10. The travel control system of claim 9, wherein the processing device is configured to:

    find a fourth intersection point as an intersection point of a straight line defining a top end of the first region of interest and the first fitted line, and find a fifth intersection point as an intersection point of a straight line defining a bottom end of the second region of interest and the second fitted line, and
    find the approximation curve from the first intersection point, the second intersection point, the third intersection point, the fourth intersection point and the fifth intersection point.

11. The travel control system of claim 10, wherein the processing device is configured to find a Bezier curve having the fourth intersection point and the fifth intersection point as two ends thereof.

12. The travel control system of claim 11,

    wherein the approximation curve in the vehicle coordinate system includes a first curved portion located on the side of the first region of interest with respect to the first intersection point and a second curved portion located on the side of the second region of interest with respect to the first intersection point, and
    wherein the controller is configured to control the travel of the work vehicle based on a deviation between the origin of the vehicle coordinate system and the second curved portion.

13. The travel control system of claim 12, wherein as seen in a plan view seen from above the ground surface on which the work vehicle travels, the origin of the vehicle coordinate system is on a rear wheel axis of the work vehicle.

14. The travel control system of claim 12, wherein the controller is configured to control the travel of the work vehicle further based on a heading deviation between a direction in which a tangent of a given point on the first curved portion extends and an orientation of the work vehicle.

15. The travel control system of claim 1 or 2, wherein the first direction is a forward direction for the work vehicle, and the second direction is a rearward direction for the work vehicle.

16. A work vehicle, comprising:

a first imaging device;
a second imaging device; and
the travel control system of claim 1 or 2.

17. A computer-implemented travel control method for a work vehicle, the travel control method causing a computer to execute:

acquiring first time-series images including a first portion of a crop row or a ridge in a field from a first imaging device attached to a work vehicle for agriculture so as to face in a first direction;
acquiring second time-series images including a second portion of the crop row or the ridge from a second imaging device attached to the work vehicle so as to face in a second direction different from the first direction; and
finding a first fitted line of the first portion in a vehicle coordinate system fixed to the work vehicle, based on the first time-series images;
finding a second fitted line of the second portion in the vehicle coordinate system, based on the second time-series images; and
determining a travel path of the work vehicle based on the first fitted line and the second fitted line.

18. A travel control system, comprising:

a processing device configured to:

acquire first time-series images including a first portion of a crop row or a ridge in a field from a first imaging device attached to a work vehicle for agriculture so as to face in a first direction;
acquire second time-series images including a second portion of the crop row or the ridge from a second imaging device attached to the work vehicle so as to face in a second direction different from the first direction; and
execute image processing on the first time-series images and the second time-series images to determine a travel path of the work vehicle; and

a controller configured to control travel of the work vehicle based on an output from the processing device;
wherein the processing device is configured to:

find a first fitted line of the first portion in a vehicle coordinate system fixed to the work vehicle, based on the first time-series images; and
find a second fitted line of the second portion in the vehicle coordinate system, based on the second time-series images; and

wherein the controller is configured to control the travel path of the work vehicle based on a first distance, on the vehicle coordinate system, from a front reference point on the work vehicle to the first fitted line and a second distance, on the vehicle coordinate system, from a rear reference point on the work vehicle to the second fitted line.

19. The travel control system of claim 18, wherein the controller is configured to control the travel of the work vehicle so that the first distance is minimum and the second distance is minimum.

20. The travel control system of claim 18,

wherein the first distance and the second distance are each a signed distance, and
wherein the controller is configured to estimate a heading deviation between the first fitted line and an orientation of the work vehicle, from the first signed distance, and estimate a positional deviation between the rear reference point and the second fitted line, from the second signed distance.

21. The travel control system of any one of claims 18 through 20, wherein as seen in a plan view seen from above a ground surface on which the work vehicle travels, the front reference point is on a front wheel axis of the work vehicle, and the rear reference point is on a rear wheel axis of the work vehicle.

22. The travel control system of any one of claims 18 through 20, wherein the processing device is configured to:

find a first pre-fitted line that linearly approximates the first portion in a first image coordinate system defining coordinates of pixels of the first time-series images,
find a second pre-fitted line that linearly approximates the second portion in a second image coordinate system defining coordinates of pixels of the second time-series images,
perform coordinate transformation on the first pre-fitted line from the first image coordinate system into the vehicle coordinate system to find the first fitted line in the vehicle coordinate system, and
perform coordinate transformation on the second pre-fitted line from the second image coordinate system into the vehicle coordinate system to find the second fitted line in the vehicle coordinate system.

23. The travel control system of any one of claims 18 through 20, wherein the processing device is configured to:

transform the first time-series images and the second time-series images respectively into first plan-view images and second plan-view images as seen from above a ground surface on which the work vehicle travels, and
find the first fitted line and the second fitted line respectively from the first plan-view images and the second plan-view images.

24. The travel control system of claim 23,

wherein the first plan-view images include a first region of interest as a target of the image processing to be executed by the processing device,
wherein the second plan-view images include a second region of interest as a target of the image processing to be executed by the processing device, and
wherein the processing device is configured to find the first fitted line from the first portion located in the first region of interest, and find the second fitted line from the second portion located in the second region of interest.

25. The travel control system of claim 24, wherein the processing device is configured to change a size of at least one of the first region of interest and the second region of interest in accordance with a travel speed of the work vehicle.

26. The travel control system of claim 24, wherein the first region of interest does not overlap the second region of interest on the vehicle coordinate system.

27. The travel control system of any one of claims 18 through 20, wherein the first direction is a forward direction for the work vehicle, and the second direction is a rearward direction for the work vehicle.

28. A work vehicle, comprising:

a first imaging device;
a second imaging device; and
the travel control system of any one of claims 18 through 20.

29. A computer-implemented travel control method for a work vehicle, the travel control method causing a computer to execute:

acquiring first time-series images including a first portion of a crop row or a ridge in a field from a first imaging device attached to a work vehicle for agriculture so as to face in a first direction;
acquiring second time-series images including a second portion of the crop row or the ridge from a second imaging device attached to the work vehicle so as to face in a second direction different from the first direction; and
finding a first fitted line of the first portion in a vehicle coordinate system fixed to the work vehicle, based on the first time-series images;
finding a second fitted line of the second portion in the vehicle coordinate system, based on the second time-series images; and

controlling travel of the work vehicle based on a first distance, on the vehicle coordinate system, from a front reference point on the work vehicle to the first fitted line and a second distance, on the vehicle coordinate system, from a rear reference point on the work vehicle to the second fitted line.

*FIG.1*

*FIG.2*

*FIG.3*

*FIG.4*

*FIG.5*

*FIG.6*

*FIG.7*

*FIG.8*

FIG.9

*FIG.10*

START

↓

ACQUIRING FIRST TIME-SERIES IMAGES INCLUDING
A FIRST PORTION OF A CROP ROW OR A RIDGE IN A
FIELD FROM THE FIRST IMAGING DEVICE, AND
ACQUIRING SECOND TIME-SERIES IMAGES INCLUDING A
SECOND PORTION OF THE CROP ROW OR THE RIDGE IN
THE FIELD FROM THE SECOND IMAGING DEVICE — S100

↓

FINDING A FIRST FITTED LINE OF THE FIRST PORTION IN
THE VEHICLE COORDINATE SYSTEM BASED ON THE
FIRST TIME-SERIES IMAGES, AND FINDING A SECOND
FITTED LINE OF THE SECOND PORTION IN THE VEHICLE
COORDINATE SYSTEM BASED ON THE SECOND TIME-
SERIES IMAGES — S200

↓

DETERMINING A TRAVEL PATH OF THE
AGRICULTURAL MACHINE BASED ON
THE FIRST FITTED LINE AND THE
SECOND FITTED LINE — S300

↓

END

*FIG.11*

40

*FIG.12A*

*FIG.12B*

*FIG.13*

## FIG.14

## FIG.15

START

FINDING A FIRST INTERSECTION POINT AS AN INTERSECTION POINT OF THE FIRST FITTED LINE AND THE SECOND FITTED LINE, A SECOND INTERSECTION POINT AS AN INTERSECTION POINT OF A STRAIGHT LINE DEFINING A BOTTOM END OF THE FIRST REGION OF INTEREST AND THE FIRST FITTED LINE, AND A THIRD INTERSECTION POINT AS AN INTERSECTION POINT OF A STRAIGHT LINE DEFINING A TOP END OF THE SECOND REGION OF INTEREST AND THE SECOND FITTED LINE — S310

FINDING A FOURTH INTERSECTION POINT AS AN INTERSECTION POINT OF A STRAIGHT LINE DEFINING A TOP END OF THE FIRST REGION OF INTEREST AND THE FIRST FITTED LINE, AND A FIFTH INTERSECTION POINT AS AN INTERSECTION POINT OF A STRAIGHT LINE DEFINING A BOTTOM END OF THE SECOND REGION OF INTEREST AND THE SECOND FITTED LINE — S311

FINDING A BEZIER CURVE HAVING THE FOURTH INTERSECTION POINT AND THE FIFTH INTERSECTION POINT AS TWO ENDS THEREOF, FROM THE FIRST TO FIFTH INTERSECTION POINTS — S312

END

*FIG.16*

*FIG.17*

*FIG.18*

*FIG.19*

*FIG.20*

START

CALCULATING A FIRST DISTANCE, ON THE VEHICLE
COORDINATE SYSTEM, FROM A FRONT REFERENCE
POINT ON THE AGRICULTURAL MACHINE TO THE FIRST
FITTED LINE AND A SECOND DISTANCE,
ON THE VEHICLE COORDINATE SYSTEM, FROM A REAR
REFERENCE POINT ON THE AGRICULTURAL MACHINE
TO THE SECOND FITTED LINE — S320

CONTROLLING TRAVEL OF THE AGRICULTURAL MACHINE
SO THAT THE FIRST DISTANCE IS MINIMUM
AND THE SECOND DISTANCE IS MINIMUM — S321

END

FIG.21

*FIG.22*

FIG.23

FIG.24

*FIG.25*

100
160

120,121 — FIRST, SECOND IMAGING DEVICES

170 — STORAGE DEVICE

180

130

131 — GNSS RECEIVER

135 — IMU

181 — ECU (IMAGE RECOGNITION)

182 — ECU (SPEED CONTROL)

136 — OBSTACLE SENSOR

183 — ECU (STEERING CONTROL)

140 — DRIVE DEVICE

184 — ECU (AUTOMATIC STEERING CONTROL)

150 — STEERING WHEEL SENSOR

185 — ECU (IMPLEMENT CONTROL)

152 — ANGLE-OF-TURN SENSOR

186 — ECU (DISPLAY CONTROL)

200 — OPERATIONAL TERMINAL

187 — ECU (BUZZER CONTROL)

210 — OPERATION SWITCHES

220 — BUZZER

190 — COMMUNICATION IF

360 — CONTROLLER

390 — COMMUNICATION IF

300

340 — DRIVE DEVICE

## INTERNATIONAL SEARCH REPORT

| International application No. |
|---|
| **PCT/JP2023/038115** |

**A. CLASSIFICATION OF SUBJECT MATTER**

*A01B 69/00*(2006.01)i; *G05D 1/43*(2024.01)i
FI:   A01B69/00 303G; A01B69/00 303D; G05D1/02 N

According to International Patent Classification (IPC) or to both national classification and IPC

**B. FIELDS SEARCHED**

Minimum documentation searched (classification system followed by classification symbols)

A01B69/00; G05D1/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-101943 A (KUBOTA KK) 02 July 2020 (2020-07-02)<br>entire text, all drawings | 1-29 |
| A | JP 2624390 B2 (KUBOTA KK) 25 June 1997 (1997-06-25)<br>entire text, all drawings | 1-29 |
| A | JP 2016-146061 A (NAT AGRICULTURE & FOOD RES ORGANIZATION) 12 August 2016 (2016-08-12)<br>entire text, all drawings | 1-29 |
| A | JP 2013-201958 A (NAT AGRICULTURE & FOOD RES ORGANIZATION) 07 October 2013 (2013-10-07)<br>entire text, all drawings | 1-29 |
| A | JP 2016-208871 A (UNIV KAGOSHIMA) 15 December 2016 (2016-12-15)<br>entire text, all drawings | 1-29 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 December 2023** | **19 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/038115**

| Patent document cited in search report | | | Publication date (day/month/year) | Patent family member(s) | Publication date (day/month/year) |
|---|---|---|---|---|---|
| JP | 2020-101943 | A | 02 July 2020 | (Family: none) | |
| JP | 2624390 | B2 | 25 June 1997 | (Family: none) | |
| JP | 2016-146061 | A | 12 August 2016 | (Family: none) | |
| JP | 2013-201958 | A | 07 October 2013 | (Family: none) | |
| JP | 2016-208871 | A | 15 December 2016 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016208871 A
- WO 2023276227 A
- JP 2624390 B
- JP 2016146061 A